# EUROPÄISCHE PATENTSCHRIFT

(11) **EP 3 909 221 B1**
(45) Veröffentlichungstag und Bekanntmachung des Hinweises auf die Patenterteilung: **27.07.2022**
(21) Anmeldenummer: 20711778.9
(22) Anmeldetag: 08.01.2020
(51) Int. Cl.: H04L 9/08, H04L 9/40, G06F 21/45, H04L 9/00

(54) **VERFAHREN ZUM SICHEREN BEREITSTELLEN EINER PERSONALISIERTEN ELEKTRONISCHEN IDENTITÄT AUF EINEM ENDGERÄT**
METHOD FOR SECURELY PROVIDING A PERSONALIZED ELECTRONIC IDENTITY ON A TERMINAL
PROCÉDÉ POUR FOURNIR EN TOUTE SÉCURITÉ UNE IDENTITÉ ÉLECTRONIQUE PERSONNALISÉE SUR UN TERMINAL

(30) Priorität: 08.01.2019 DE 102019100335
(43) Veröffentlichungstag der Anmeldung: 17.11.2021
(73) Patentinhaber: Bundesdruckerei GmbH, 10969 Berlin (DE)
(72) Erfinder: DIETRICH, Frank, 12437 Berlin (DE); MARGRAF, Marian, 14542 Werder (DE); OHLENDORF, Tim, 12163 Berlin (DE); SCHWAN, Matthias, 13088 Berlin (DE)
(74) Vertreter: Bittner, Thomas L.
(86) Internationale Anmeldenummer: PCT/DE2020/100006
(87) Internationale Veröffentlichungsnummer: WO 2020/143877

(56) Entgegenhaltungen:
- WO-A1-2013/151752
- US-A1- 2013 311 771
- US-A1- 2015 220 917
- Wikipedia: "Security Assertion Markup Language - Wikipedia", , 28. August 2016 (2016-08-28), XP055417859, Gefunden im Internet: URL:https://en.wikipedia.org/w/index.php?t itle=Security_Assertion_Markup_Language&ol did=736544308 [gefunden am 2017-10-23]

## Beschreibung

Die Erfindung betrifft ein Verfahren zum sicheren Bereitstellen einer personalisierten elektronischen Identität auf einem Endgerät.

### Hintergrund

Eine (personalisierte) elektronische Identität (eID) oder digitale Identität im Sinne der vorliegenden Anmeldung ist ein elektronisches Mittel oder Werkzeug, mit dem sich eine Person mittels bestimmter der Person zugeordneter Identitätsattribute elektronisch authentisiert, um die eigene Identität nachzuweisen, zum Beispiel in Verbindung mit der Inanspruchnahme einer online- oder web-basierten elektronischen Dienstleistung. Die elektronische Identität kann der Person oder einem Prozess eindeutig zugeordnet werden. In ihrer einfachsten Form kann eine elektronische Identität aus Benutzername und Passwort bestehen. Eine elektronische Identität mit höherem Sicherheitsniveau kann beispielsweise mittels Zwei-Faktor-Authentifizierung über eine Smartcard und eine persönliche Identifikationsnummer (PIN) aufgebaut werden.

Mobile Geräte dienen verstärkt als Identitätsnachweis, Authentisierungs- und Autorisierungsmittel zur Inanspruchnahme von Dienstleistungen. Hierbei werden elektronische Identitäten von Personen auf den Endgeräten vornehmlich von Endgeräteherstellen genutzt, um Dienste der Endgerätehersteller durchzuführen. Auch Drittanbieter von Online-Diensten wie Banken wollen jedoch etwa TAN-Applikationen (Transaktionsnummer- oder Einmalkennwort-Applikationen) für ihre Nutzer sicher in unsicheren Umgebungen personalisieren (elektronische Identitäten der Nutzer bereitstellen) und für eine Nutzung vorbereiten. Bekannte Verfahren und Lösungen hierfür sind regelmäßig dienstspezifisch, sodass eine Mehrfachverwendung über einen Dienst hinaus nicht vorgesehen ist. Es gibt Verfahren, die das Ad-hoc-Identifizierungsproblem (Erstregistrierung) durch einen zentralen Dienst (Identitätsprovider oder ID-Provider) lösen. Bei einem Identitätsprovider handelt es sich um einen Dienstleister, welcher elektronische Identitätsinformationen von Personen erstellt, verwaltet und liefert. Nachteilig für den Einsatz eines Identitätsproviders ist jedoch, dass Identifizierungsanfragen prinzipiell eine Nachverfolgung des Nutzers durch eine solche zentrale Instanz ermöglichen können.

Im Dokument US 2018 / 0 191 695 A1 werden ein System, eine Vorrichtung, ein Verfahren und ein maschinenlesbares Medium zum Bootstrapping eines Authentifikators beschrieben. Das Verfahren weist Folgendes auf: Bestätigen einer Identität eines Benutzers durch eine erste Partei unter Verwendung einer ersten Identitätsüberprüfungstechnik in Reaktion darauf, dass der Benutzer ein Gerät mit einem Authentifikator erhält; Erzeugen oder Sammeln von initialen Benutzerüberprüfungsreferenzdaten auf Verifizieren der Identität des Benutzers durch die erste Identitätsverifizierungstechnik; sichere Bereitstellung der initialen Benutzerüberprüfungsreferenzdaten oder von den initialen Benutzerüberprüfungsreferenzdaten abgeleiteten Daten an den Authentifizierer; wobei der Authentifizierer eine zweite Identitätsüberprüfungstechnik durch Vergleichen der initialen Benutzerverifizierungsreferenzdaten oder der aus den initialen Benutzerverifizierungsreferenzdaten abgeleiteten Daten mit Daten, die vom Benutzer gesammelt wurden, oder Daten, die von einem Gerät gesammelt wurden, das dem Benutzer bereitgestellt wurde, implementiert; und Liefern eines Nachweises einer erfolgreichen Überprüfung der Identität des Benutzers an eine zweite Partei während einer Registrierungsanforderung des Authentifizierers an die zweite Partei.

Das Dokument US 2015 / 0 294 313 A1 betrifft Multi-Faktor-Authentifizierungstechniken, die eine Push-Authentifizierungstechnologie für Transaktionen verwenden. Es ist Folgendes vorgesehen: Empfangen einer Benutzerauthentifizierungsanforderung und von Transaktionsdaten von einem Zugriffskontrollserver (ACS) durch eine als Authentifizierungsdienstplattform arbeitende Sicherheitsplattform, Bestimmen einer Authentifizierungsregel, Erzeugen einer Benutzervalidierungsanforderungsnachricht, Übertragen der Benutzervalidierungsanforderungsnachricht an ein mobiles Benutzergerät und Empfangen von Benutzerauthentifizierungsdaten. Die Sicherheitsplattform validiert dann die Benutzerauthentifizierungsdaten, sendet eine Geräteauthentifizierungsanforderung, empfängt eine mit einem privaten Schlüssel des Benutzers signierte Geräteauthentifizierungsantwort und authentifiziert den Benutzer basierend auf der Geräteauthentifizierungsantwort und dem privaten Schlüssel.

In dem Dokument US 2013 / 311 771 A1 ist das Bereitstellen eine Zertifikats für eine Vorrichtung beschrieben, wobei einen Zugangsdaten-Nutzernamen und ein Zugangsdaten-Passwort identifizierende Zugangsdaten von der Vorrichtung durch einen Zugangspunkt übertragen werden und gemäß einem Zwei-Faktor-Authentifizierungsverfahren bestimmt wird, ob den Zugangsdaten vertraut wird. Das Zwei-Faktor-Authentifizierungsverfahren bestimmt, dass den Zugangsdaten vertraut wird, falls der Zugangsdaten-Nutzername und das Zugangsdaten-Passwort mit einem vertrauenswürdigen Nutzernamen und Passwort übereinstimmen, welche zuvor mit der Vorrichtung verknüpft wurden, und eine mit dem Zugangspunkt verknüpfte Adresse innerhalb eines Bereichs vertrauenswürdiger Adressen liegt. Das Zwei-Faktor-Authentifizierungsverfahren bestimmt, dass den Zugangsdaten nicht vertraut wird, falls der Nutzername und das Passwort nicht mit dem vertrauenswürdigen Nutzernamen und Passwort übereinstimmen oder falls die Adresse nicht innerhalb des Bereichs vertrauenswürdiger Adressen liegt. Es wird der Vorrichtung eine Bestätigung bereitgestellt, falls den Zugangsdaten vertraut wird, wobei die Bestätigung für die Vorrichtung ausreichend ist, um ein Zertifikat anzufordern. Die Zustellung der Bestätigung wird verhindert, falls den Zugangsdaten nicht vertraut wird, bis die Vorrichtung Zugangsdaten übermittelt, denen vertraut wird.

### Zusammenfassung

Aufgabe der Erfindung ist es, auf sicherem Weg eine personalisierte elektronische Identität eines Nutzers auf einem Endgerät bereitzustellen, welche dem Nutzer des Endgeräts eine universelle Authentisierung mittels des Endgeräts gegenüber beliebigen Online-Dienstleistungen ermöglicht.

Zur Lösung ein Verfahren zum sicheren Bereitstellen einer personalisierten elektronischen Identität auf einem Endgerät den unabhängigen Anspruch 1 geschaffen. Ausgestaltungen sind Gegenstand abhängiger Unteransprüche,

Nach einem Aspekt ist ein Verfahren zum sicheren Bereitstellen eines personalisierten elektronischen Identität auf einem Endgerät geschaffen, die von einem Nutzer zum Identifizieren bei Inanspruchnahme einer Online-Dienstleistung nutzbar ist, wobei bei dem Verfahren in einem System mit Datenverarbeitungseinrichtungen und einem Endgerät, welches einem Nutzer zugeordnet ist, eine Identifikations-Applikation auf dem Endgerät und weiterhin eine Personalisierungs-Applikation und eine Identitätsprovider-Applikation ausgeführt werden. Bei dem Verfahren ist Folgendes vorgesehen:
- Übertragen einer Anfrage zum Übermitteln eines dem Nutzer zugeordneten Identitätsattributs von der Personalisierungs-Applikation an die Identitätsprovider-Applikation;
- Übertragen des Identitätsattributs von der Identitätsprovider-Applikation an die Personalisierungs-Applikation, nachdem von dem Nutzer eine Zustimmung zum Übertragen des Identitätsattributs durch die Identitätsprovider-Applikation empfangen wurde;
- Erzeugen eines asymmetrischen Schlüsselpaares mit einem öffentlichen und einem privaten Schlüssel durch die Identifikations-Applikation auf dem Endgerät als Reaktion auf das Empfangen einer Anfrage zum Erzeugen des asymmetrischen Schiüsselpaares in dem Endgerät von der Personalisierungs-Applikation;
- Übertragen des öffentlichen Schlüssels von der Identifikations-Applikation auf dem Endgerät an die Personalisierungs-Applikation;
- Erzeugen eines elektronischen Zertifikats für den öffentlichen Schlüssel durch die Personalisierungs-Applikation und Speichern des elektronischen Zertifikats zu einer ersten Public-Key-Infrastruktur der Personalisierungs-Applikation in einem Datenspeicher, weiterhin umfassend: Erzeugen eines Hash-Werts für das Identitätsattribut und Aufnehmen des Hash-Werts in das elektronische Zertifikat;
- Verschlüsseln des Identitätsattributs mit dem öffentlichen Schlüssel durch die Personalisierungs-Applikation;
- Übertragen des verschlüsselten Identitätsattributs und des elektronischen Zertifikats von der Personalisierungs-Applikation an die Identifikations-Applikation auf dem Endgerät und Entschlüsseln des verschlüsselten Identitätsattributs mit dem privaten Schlüssel und Speichern des entschlüsselten Identitätsattributs und des elektronischen Zertifikats als personalisierte elektronische Identität des Nutzers in einer lokalen Speichereinrichtung des Endgeräts.

Das asymmetrische Schlüsselpaar kann in dem Endgerät als gerätebezogenes asymmetrisches Schlüsselpaar erzeugt wird.

Die Identifikations-Applikation kann zumindest teilweise in einem weiteren Endgerät ausgeführt werden.

Das Verfahren kann weiterhin Folgendes aufweisen: Verschlüsseln des elektronischen Zertifikats mit dem öffentlichen Schlüssel durch die Personalisierungs-Applikation Übertragen des verschlüsselten elektronischen Zertifikats von der Personalisierungs-Applikation an die Identifikations-Applikation auf dem Endgerät und Entschlüsseln des verschlüsselten elektronischen Zertifikats mit dem privaten Schlüssel.

Es kann Berichtsinformationen erzeugt und übertragen werden, wobei hierbei Folgendes vorgesehen sein kann: Erzeugen von ersten Berichtsdaten mittels der Identifikations-Applikation auf dem Endgerät, die auf das Speichern des elektronischen Zertifikats, das Bereitstellen der personalisierten elektronischen Identität im Endgerät anzeigen, und Übertragen der ersten Berichtsdaten an die Personalisierungs-Applikation.

Das elektronische Zertifikat kann als ein elektronisches Zertifikat nach dem X.509-Standard erzeugt werden. X.509 ist ein ITU-T-Standard für eine Public-Key-Infrastruktur zum Erstellen digitaler oder elektronischer Zertifikate. Der X.509-Standard ist auch als ISO / IEC 9594-8 zuletzt im Oktober 2016 aktualisiert worden. Der X.509-Standard spezifiziert zum Beispiel die folgenden Datentypen: Public-Key-Zertifikat, Attributzertifikat, Certificate Revocation List (CRL) und Attribute Certificate Revocation List (ACRL). In der elektronischen Kommunikation können X.509-Zertifikate bei den TLS-Versionen unterschiedlicher Übertragungsprotokolle verwendet werden, zum Beispiel beim Abruf von Web-Seiten mit dem HTTPS-Protokoll oder zum Unterschreiben und Verschlüsseln von Daten nach dem S/MIME-Standard.

Das elektronische Zertifikat und das Identitätsattribut können als personalisierte elektronische Identität für eine Identifizierung des Nutzers gegenüber einem Online-Dienstleister verwendet werden, wobei hierbei Folgendes vorgesehen ist:
- Bereitstellen einer Dienstleister-Applikation auf einer der Datenverarbeitungseinrichtungen des Systems;
- Ausbilden einer Datenkommunikationsverbindung zwischen der Identifikations-Applikation auf dem Endgerät und der Dienstleister-Applikation als Reaktion auf das Empfangen einer Anfrage zum Nutzen einer über die Dienstleister-Applikation bereitgestellten Online-Dienstleistung durch die Dienstleister-Applikation;
- Übertragen des elektronischen Zertifikats mit dem hiervon umfassten Hash-Wert für das Identitätsattribut sowie des Identitätsattributs von der Identifikations-Applikation an die Dienstleister-Applikation;
- Prüfen des elektronischen Zertifikats auf Gültigkeit durch die Personalisierungs-Applikation nach Erhalt des elektronischen Zertifikats von der Dienstleister-Applikation;
- Berechnen eines Vergleichs-Hash-Werts für das von der Identifikations-Applikation erhaltene Identitätsattribut durch die Dienstleister-Applikation und Vergleichen des Vergleichs-Hash-Werts mit dem Hash-Wert für das Identitätsattribut aus dem elektronischen Zertifikat und
- Freigeben des Online-Dienstes für den Nutzer, wenn das elektronische Zertifikat als gültig geprüft wird und der Vergleichs-Hash-Wert dem Hash-Wert entspricht.

Die Datenkommunikationsverbindung kann als eine gegenseitig authentisierte Datenkommunikationsverbindung ausgebildet wird. Die gegenseitig authentisierten Datenkommunikationsverbindung kann als eine TLS-Verbindung ausgebildet werden. Transport Layer Security (TLS, englisch für Transportschichtsicherheit), weitläufiger bekannt unter der Vorgängerbezeichnung Secure Sockets Layer (SSL), ist ein hybrides Verschlüsselungsprotokoll zur sicheren Datenübertragung. Zum Ausbilden der gegenseitig authentisierten Datenkommunikationsverbindung ist eine zertifikatsbasierte Authentifizierung vorgesehen, insbesondere um sogenannten Man-in-the-Middle-Angriffe entgegenzuwirken. Alternativ können auch andere Protokolle wie zum Beispiel PACE (Password-Authenticated Connection Establishment) oder EAC (Extended Access Control) eingesetzt werden.

Zum Bereitstellen und zum Konfigurieren der Identifikations-Applikation auf dem Endgerät kann weiterhin Folgendes vorgesehen sein: Installieren der Identifikations-Applikation auf dem Endgerät; Starten der Identifikations-Applikation als Reaktion auf eine Nutzerstarteingabe; Ausbilden einer sicheren Datenkommunikationsverbindung zwischen der Identifikations-Applikation auf dem Endgerät und der Personalisierungs-Applikation auf einer ersten Datenverarbeitungseinrichtung; Erzeugen eines weiteren asymmetrischen Schlüsselpaares durch die Identifikations-Applikation in dem Endgerät; Übertragen des weiteren öffentlichen Schlüssels und einer Gerätekennung von der Identifikations-Applikation auf dem Endgerät an die Personalisierungs-Applikation und Erzeugen eines vorläufigen elektronischen Zertifikats für den weiteren öffentlichen Schlüssel, welches die Gerätekennung enthält, durch die Personalisierungs-Applikation in der ersten Datenverarbeitungseinrichtung.

Wahlweise kann hierbei ergänzend Folgendes vorgesehen sein: Verschlüsseln des vorläufigen elektronischen Zertifikats mit dem ersten öffentlichen Schlüssel durch die Personalisierungs-Applikation und Übertragen des verschlüsselten vorläufigen elektronischen Zertifikats an die Identifikations-Applikation auf dem Endgerät; und Entschlüsseln des verschlüsselten vorläufigen elektronischen Zertifikats mit dem ersten privaten Schlüssel durch die Identifikations-Applikation und Speichern des vorläufigen elektronischen Zertifikats in der lokalen Speichereinrichtung des Endgeräts.

Nach dem Speichern des vorläufigen elektronischen Zertifikats kann die Gerätekennung an den Nutzer ausgegeben werden, zum Beispiel über ein Display des Endgeräts. Der Nutzer kann auch darüber informiert werden, dass das Bereitstellen und das Konfigurieren (Set-up) der Identifikations-Applikation erfolgreich abgeschlossen ist, sei es mittels einer Audio- oder einer Videoausgabe (Bilddaten).

Nach einem weiteren Aspekt ist ein Verfahren zum sicheren Bereitstellen einer personalisierten elektronischen Identität auf einem Endgerät vorgesehen, die von einem Nutzer zum Identifizieren bei Inanspruchnahme einer Online-Dienstleistung nutzbar ist. Bei dem Verfahren werden in einem System mit Datenverarbeitungseinrichtungen und einem Endgerät, welches einem Nutzer zugeordnet ist, eine Identifikations-Applikation auf dem Endgerät und weiterhin eine Registrierungs-Applikation, eine Personalisierungs-Applikation sowie eine Identitätsprovider-Applikation ausgeführt. Das Verfahren weist hierbei Folgendes auf:
- Empfangen einer Anfrage zum Registrieren der Identifikations-Applikation durch die Registrierungs-Applikation;
- Empfangen einer Gerätekennung, die das Endgerät eindeutig identifiziert, durch die Registrierungs-Applikation von dem Endgerät, welches die Gerätekennung zuvor im Rahmen einer Nutzereingabe empfangen hat;
- Übertragen einer Anfrage zum Übermitteln eines dem Nutzer zugeordneten Identitätsattributs von der Personalisierungs-Applikation an die Identitätsprovider-Applikation:
- Übertragen des Identitätsattributs von der Identitätsprovider-Applikation an die Personalisierungs-Applikation, nachdem von dem Nutzer eine Zustimmung zum Übertragen des Identitätsattributs durch die Identitätsprovider-Applikation empfangen wurde;
- Erzeugen eines scanbaren Codes mittels der Registrierungs-Applikation, wobei der scanbare Code eine Nonce aufweist, die mit einem ersten öffentlichen Schlüssel verschlüsselt wird, welcher Teil eines ersten asymmetrischen Schlüsselpaares ist, das mittels der Identifikations-Applikation auf dem Endgerät erzeugt und von dem ersten öffentlichen Schlüssel und einem ersten privaten Schlüssel gebildet wird;
- Übertragen des scanbaren Codes an und Ausgeben des scanbaren Codes durch die Registrierungs-Applikation;
- Scannen des scanbaren Codes und Entschlüsseln der Nonce mittels des ersten privaten Schlüssels durch die Identifikations-Applikation und
- Ausbilden einer gegenseitig authentisierten Datenkommunikationsverbindung zwischen der Identifikations-Applikation auf dem Endgerät und der Personalisierungs-Applikation, die in einer ersten Datenverarbeitungseinrichtung ausgeführt wird.

Bei dem Verfahren ist unter Verwendung der hergestellten gegenseitig authentisierten Datenkommunikationsverbindung zur Datenübertragung zwischen der Identifikations-Applikation und der Personalisierungs-Applikation weiterhin Folgendes vorgesehen:
- Übertragen der entschlüsselten Nonce von der Identifikations-Applikation auf dem Endgerät an die Personalisierungs-Applikation und Prüfen der Nonce auf Gültigkeit durch die Personalisierungs-Applikation;
- Erzeugen eines zweiten asymmetrischen Schlüsselpaares mit einem zweiten öffentlichen und einem zweiten privaten Schlüssel durch die Identifikations-Applikation auf dem Endgerät als Reaktion auf das Empfangen einer Anfrage zum Erzeugen des zweiten asymmetrischen Schlüsselpaares in dem Endgerät von der Personalisierungs-Applikation:
- Übertragen des zweiten öffentlichen Schlüssels von der Identifikations-Applikation auf dem Endgerät an die Personalisierungs-Applikation;
- Erzeugen eines elektronischen Zertifikats für den zweiten öffentlichen Schlüssel durch die Personalisierungs-Applikation und Speichern des elektronischen Zertifikats zu einer Public-Key-Infrastruktur der Personalisierungs-Applikation in einem Datenspeicher;
- Verschlüsseln des Identitätsattributs mit dem zweiten öffentlichen Schlüssel durch die Personalisierungs-Applikation;
- Übertragen des verschlüsselten Identitätsattributs und des elektronischen Zertifikats von der Personalisierungs-Applikation an die Identifikations-Applikation auf dem Endgerät und
- Entschlüsseln des verschlüsselten Identitätsattributs mit dem zweiten privaten Schlüssel und Speichern des entschlüsselten Identitätsattributs und des elektronischen Zertifikats als personalisierte elektronische Identität des Nutzers in einer lokalen Speichereinrichtung des Endgeräts,

Das vorgeschlagene Verfahren ermöglicht in seinen verschiedenen Ausgestaltungen das Bereitstellen einer personalisierten elektronischen Identität auf beliebigen Nutzerendgeräten. Das Verfahren kann frei von einem Austausch eines kryptografischen Geheimnisses ausgeführt werden, insbesondere zwischen dem Endgerät und der Personalisierungs-Applikation. Ein solches (gemeinsames) Geheimnis bezeichnet in der Kryptographie ein Geheimnis, das nur die an einer Kommunikation beteiligten Parteien kennen. Das gemeinsame Geheimnis kann zum Beispiel ein Passwort, eine Passphrase, eine große Zahl oder eine Reihe zufällig erzeugter Bytes sein. Trotzdem ist mit dem vorgeschlagenen Verfahren eine sichere Bereitstellung der personalisierten elektronischen Identität auf dem Endgerät in unsicherer Umgebung unterstützt. Die auf dem Endgerät bereitgestellte personalisierte elektronische Identität kann dann vom Nutzer zum Nachweis seiner Identität für beliebige Online-Dienste oder - Dienstleistungen verwendet werden.

Das Endgerät kann ein mobiles Endgerät wie Mobiltelefon oder Laptop-Computer oder ein stationäres Endgerät sein, zum Beispiel ein Desktop-Personalcomputer.

Die Datenverarbeitungseinrichtungen verfügen bei den verschiedenen Ausführungen jeweils über einen oder mehrere Prozessoren zum Verarbeiten von elektronischen Daten sowie einen zugeordneten Datenspeicher. Der Datenaustausch kann einen drahtlosen Datenaustausch und wahlweise ergänzend einen kabelgebundenen Datenaustausch umfassen.

Bei diesen oder anderen Ausgestaltzungen können die Registrierungs-Applikation, die Personalisierungs-Applikation und / oder die Identitätsprovider-Applikation jeweils insbesondere dazu dienen, Funktionalitäten in Verbindung mit der Personalisierung der auf dem Endgerät bereitzustellenden elektronischen Identität zur Verfügung zu stellen. Nach der Personalisierung kann der Nutzer des Endgeräts die hierauf bereitgestellte personalisierte elektronische Identität nutzen, um sich für das Inanspruchnahmen eines Online-Dienstes zu identifizieren, also seine Identität nachzuweisen. Die Applikationen, die als Software-Anwendungen bereitgestellt sind, können jeweils auf getrennten Datenverarbeitungseinrichtungen implementiert sein. Alternativ können mehrere Applikationen auf einer gemeinsamen Datenverarbeitungseinrichtung installiert sein.

Zum Ausbilden der gegenseitig authentisierten Datenkommunikationsverbindung ist eine zertifikatsbasierte Authentifizierung vorgesehen, insbesondere um sogenannten Man-in-the-Middle-Angriffe entgegenzuwirken.

In der hier verwendeten Bedeutung bezieht sich die Bezeichnung Nonce (Abkürzung für: *"used only once"* oder *"number used once"*) auf eine Zahlen- und / oder Buchstabenkombination, die nur ein einziges Mal in dem jeweiligen Kontext verwendet wird. Es kann vorgesehen sein, dass jede Nonce jeweils nur ein einziges Mal verwendet wird. Typische Möglichkeiten, eine Nonce zu erzeugen, sind die Verwendung von (kryptografisch sicheren) Zufallswerten oder Pseudozufallswerten, die ausreichend groß sind, sodass die Wahrscheinlichkeit einer doppelten Benutzung vernachlässigbar klein ist (vgl. Geburtstagsparadoxon), oder die Verwendung eines Zählers. Die Nonce kann auch einen Zeitstempel und / oder einen zeitabhängigen Wert beinhalten.

Wenn im Rahmen des Verfahrens beim Prüfen der Nonce durch die Personalisierungs-Applikation festgestellt wird, dass die Nonce nicht gültig ist, wird der weitere Ablauf zum Bereitstellen der personalisierten elektronischen Identität auf dem Endgerät unterbunden, zum Beispiel durch Abbruch. Insbesondere erfolgt die Anfrage zum Erzeugen des zweiten asymmetrischen Schlüsselpaares in dem Endgerät nur, wenn Gültigkeit festgestellt wurde.

Weiterhin kann wenigstens einer der folgenden Schritte vorgesehen sein: Ausführen der Registrierungs-Applikation in einer zweiten Datenverarbeitungseinrichtung und Ausführen der Identitätsprovider-Applikation in einer dritten Datenverarbeitungseinrichtung, wobei die zweite und / oder die dritte Datenverarbeitungseinrichtung getrennt von der ersten Datenverarbeitungseinrichtung gebildet sind.

Das erste und / oder das zweite asymmetrische Schlüsselpaar können in dem Endgerät als gerätebezogenes asymmetrisches Schlüsselpaar erzeugt werden. Hierbei kann vorgesehen sein, dass der private Schlüssel des in dem Endgerät erzeugten asymmetrischen Schlüsselpaares im Endgerät selbst gespeichert wird und verhindert, dass der private Schlüssel das Endgerät verlässt, also von diesem nicht an andere Geräte oder Datenverarbeitungseinrichtungen übertragen wird.

Auf das Empfangen der Anfrage zum Registrieren der Identifikations-Applikation kann weiterhin Folgendes vorgesehen sein: Empfangen von zusätzlichen Identitätsinformationen, die dem Nutzer zugeordnet ist, durch die die Registrierungs-Applikation von dem Endgerät, welches die zusätzlichen Identitätsinformationen zuvor im Rahmen einer weiteren Nutzereingabe empfangen hat; und Übertragen der zusätzlichen Identitätsinformationen von der Registrierungs-Applikation an die Personalisierungs-Applikation in der ersten Datenverarbeitungseinrichtung. Das elektronische Zertifikat für den zweiten öffentlichen Schlüssel durch die Personalisierungs-Applikation kann die zusätzlichen Identitätsinformationen als ein weiteres Identitätsattribut aufweisend erzeugt werden.

Die Identifikations-Applikation kann zumindest teilweise in einem weiteren Endgerät ausgeführt wird. Das weitere Endgerät kann ein mobiles Endgerät wie Mobiltelefon oder Laptop-Computer oder ein stationäres Endgerät sein, zum Beispiel ein Desktop-Personalcomputer. Es kann vorgesehen sein, dass die Anfrage zum Registrieren der Identifikations-Applikatiön von dem weiteren Endgerät empfangen wird. Alternativ oder ergänzend kann die Nutzereingabe am weiteren Endgerät empfangen werden. Der scannbare Code kann über eine Ausgabeeinrichtung, zum Beispiel ein Display, am weiteren Endgerät ausgegeben werden. Der kann dem ausgegeben Code dann mittels des Endgeräts scannen, also mittels Scaneinrichtung des Endgeräts einlesen, wie dies in verschiedenen Ausführungsformen von optischen Scanprozessen an sich bekannt ist.

Es kann vorgesehen sein, dass Berichtsinformationen erzeugt und übertragen werden, wobei Folgendes vorgesehen ist: Erzeugen von ersten Berichtsdaten mittels der Identifikations-Applikation auf dem Endgerät, die auf das Speichern des elektronischen Zertifikats, das Bereitstellen der personalisierten elektronischen Identität im Endgerät anzeigen; und Übertragen der ersten Berichtsdaten an die Personalisierungs-Applikation. In vergleichbarer Weise können dann die Personalisierungs-Applikation die Registrierungs-Applikation und diese den Nutzer mit entsprechenden Berichtsdaten über das erfolgreiche und abgeschlossene Bereitstellen der personalisierten elektronischen Identität im Endgerät informieren,

Vor dem Empfangen der Anfrage zum Registrieren der Identifikations-Applikation kann zum Bereitstellen und zum Konfigurieren der Identifikations-Applikation auf dem Endgerät Folgendes vorgesehen sein:
- Installieren der Identifikations-Applikation auf dem Endgerät;
- Starten der Identifikations-Applikation als Reaktion auf eine Nutzerstarteingabe
- Ausbilden einer sicheren Datenkommunikationsverbindung zwischen der Identifikations-Applikation auf dem Endgerät und der Personalisierungs-Applikation auf der ersten Datenverarbeitungseinrichtung;
- Erzeugen des ersten asymmetrischen Schlüsselpaares durch die Identifikations-Applikation in dem Endgerät;
- Übertragen des ersten öffentlichen Schlüssels und der Gerätekennung von der Identifikations-Applikation auf dem Endgerät an die Personalisierungs-Applikation und
- Erzeugen eines vorläufigen elektronischen Zertifikats für den ersten öffentlichen Schlüssel, welches die Gerätekennung enthält, durch die Personalisierungs-Applikation in der ersten Datenverarbeitungseinrichtung.

Wahlweise kann hierbei ergänzend Folgendes vorgesehen sein: Verschlüsseln des vorläufigen elektronischen Zertifikats mit dem ersten öffentlichen Schlüssel durch die Personalisierungs-Applikation und Übertragen des verschlüsselten vorläufigen elektronischen Zertifikats an die Identifikations-Applikation auf dem Endgerät; und Entschlüsseln des verschlüsselten vorläufigen elektronischen Zertifikats mit dem ersten privaten Schlüssel durch die Identifikations-Applikation und Speichern des vorläufigen elektronischen Zertifikats in der lokalen Speichereinrichtung des Endgeräts.

Nach dem Speichern des vorläufigen elektronischen Zertifikats kann die Gerätekennung an den Nutzer ausgegeben werden, zum Beispiel über ein Display des Endgeräts. Der Nutzer kann auch darüber informiert werden, dass das Bereitstellen und das Konfigurieren (Set-up) der Identifikations-Applikation erfolgreich abgeschlossen ist, sei es mittels einer Audio- oder einer Videoausgabe (Bilddaten)

Die eine oder die mehreren gegenseitig authentisierten Datenkommunikationsverbindungen können als eine TLS-Verbindung ausgebildet werden.

Bei dem Verfahren kann bei diesen Ausführungen weiterhin Folgendes vorgesehen sein: Erzeugen eines Hash-Werts für das weitere Identitätsattribut und Aufnehmen des Hash-Werts als ein Zusatzattribut in das elektronische Zertifikat.

Es kann auch bei diesen Ausgestaltungen vorgesehen sein, dass das elektronische Zertifikat als personalisierte elektronische Identität für eine Identifizierung des Nutzers gegenüber einem Online-Dienstleister verwendet wird, wobei hierbei Folgendes vorgesehen ist:
- Bereitstellen einer Dienstleister-Applikation auf einer der Datenverarbeitungseinrichtungen des Systems;
- Ausbilden einer weiteren gegenseitig authentisierten Datenkommunikationsverbindung zwischen der Identifikations-Applikation auf dem Endgerät und der Dienstleister-Applikation als Reaktion auf das Empfangen einer Anfrage zum Nutzen einer über die Dienstleister-Applikation bereitgestellten Online-Dienstleistung durch die Dienstleister-Applikation;
- Übertragen des elektronischen Zertifikats mit dem hiervon umfassten Hash-Wert für das Identitätsattribut sowie des Identitätsattributs von der Identifikations-Applikation an die Dienstleister-Applikation;
- Prüfen des elektronischen Zertifikats auf Gültigkeit durch die Personalisierungs-Applikation nach Erhalt des elektronischen Zertifikats von der Dienstleister-Applikation;
- Berechnen eines Vergleichs-Hash-Werts für das von der Identifikations-Applikation erhaltene Identitätsattribut durch die Dienstleister-Applikation und Vergleichen des Vergleichs-Hash-Werts mit dem Hash-Wert für das Identitätsattribut in dem elektronischen Zertifikat und
- Freigeben des Online-Dienstes für den Nutzer, wenn das elektronische Zertifikat als gültig geprüft wird und Vergleichs-Hash-Werts dem Hash-Wert entspricht.

Bei den verschiedenen Ausgestaltungen des Verfahrens kann des Weiteren Folgendes vorgesehen sein: Erzeugen eines Hash-Werts für das Identitätsattribut durch die Personalisierungs-Applikation; Erzeugen eines der Personalisierungs-Applikation und einer zweiten Public-Key-Infrastruktur zugeordneten dritten Schlüsselpaars umfassend einen dritten öffentlichen Schlüssel und einen dritten privaten Schlüssel sowie eines elektronischen Zertifikats für den dritten öffentlichen Schlüssel; Erzeugen, mittels des dritten privaten Schlüssels, von digitalen Signaturen des Hash-Werts für das Identitätsattribut und des elektronischen Zertifikats für den zweiten öffentlichen Schlüssel durch die Personalisierungs-Applikation; und Erzeugen einer logischen Datenstruktur durch die Personalisierungs-Applikation. Die logische Datenstruktur umfasst Folgendes: den Hash-Wert für das Identitätsattribut; einen Hash-Wert für das elektronische Zertifikat für den zweiten öffentlichen Schlüssel; das elektronische Zertifikat für den zweiten öffentlichen Schlüssel und die digitalen Signaturen des elektronischen Zertifikats für den zweiten öffentlichen Schlüssel und der Hash-Werte für das Identitätsattribut und für das elektronische Zertifikat für den zweiten öffentlichen Schlüssel. Weiterhin sind die folgenden Schritte vorgesehen: Verschlüsseln der logischen Datenstruktur, des elektronischen Zertifikats für den zweiten öffentlichen Schlüssel und des elektronischen Zertifikats für den dritten öffentlichen Schlüssel mit dem zweiten öffentlichen Schlüssel durch die Personalisierungs-Applikation; Übertragen der verschlüsselten logischen Datenstruktur, des elektronischen Zertifikats für den zweiten öffentlichen Schlüssel als verschlüsseltes Zertifikat und des verschlüsselten elektronischen Zertifikats für den dritten öffentlichen Schlüssel von der Personalisierungs-Applikation an die Identifikations-Applikation auf dem Endgerät; und Entschlüsseln der logischen Datenstruktur, des elektronischen Zertifikats für den zweiten öffentlichen Schlüssel und des elektronischen Zertifikats für den dritten öffentlichen Schlüssel mit dem zweiten privaten Schlüssel und Speichern in der lokalen Speichereinrichtung des Endgeräts. Alternativ kann auf ein Verschlüsseln der elektronischen Zertifikate verzichtet werden. Beispielweise kann nur die elektronische Datenstruktur verschlüsselt und dann als verschlüsselte elektronische Datenstruktur übertragen werden, während das oder die elektronischen Zertifikate von der Personalisierungs-Applikation an die Identifikations-Applikation auf dem Endgerät unverschlüsselt übertragen werden.

Des Weiteren kann vorgesehen sein, dass beim Erzeugen der logischen Datenstruktur eine digitale Signatur der logischen Datenstruktur erzeugt wird.

Es kann vorgesehen sein, dass das elektronische Zertifikat für den zweiten öffentlichen Schlüssel zusammen mit dem elektronischen Zertifikat für den dritten öffentlichen Schlüssel als personalisierte elektronische Identität für eine Identifizierung des Nutzers gegenüber einem Online-Dienstleister verwendet wird, wobei hierbei Folgendes vorgesehen ist: Bereitstellen einer Dienstleister-Applikation auf einer der Datenverarbeitungseinrichtungen des Systems; Ausbilden einer weiteren gegenseitig authentisierten Datenkommunikationsverbindung zwischen der Identifikations-Applikation auf dem Endgerät und der Dienstleister-Applikation als Reaktion auf das Empfangen einer Anfrage zum Nutzen einer über die Dienstleister-Applikation bereitgestellten Online-Dienstleistung durch die Dienstleister-Applikation; Übertragen der logischen Datenstruktur mit dem hiervon umfassten Hash-Wert für das Identitätsattribut sowie des Identitätsattributs von der Identifikations-Applikation an die Dienstleister-Applikation; Prüfen, durch die Personalisierungs-Applikation, auf Gültigkeit des elektronischen Zertifikats (*Cert_{ID_app}*) für den zweiten öffentlichen Schlüssel mittels der ersten Public-Key-Infrastruktur (*PKI_{2.1}*) und des elektronischen Zertifikats (*Cert_{Perso_Ident}*) für den dritten öffentlichen Schlüssel mittels der zweiten Public-Key-Infrastruktur (*PKI_{2.2}*); Berechnen eines Vergleichs-Hash-Werts für das von der Identifikations-Applikation erhaltene Identitätsattribut durch die Dienstleister-Applikation und Vergleichen des Vergleichs-Hash-Werts mit dem Hash-Wert für das Identitätsattribut in der logischen Datenstruktur und Freigeben des Online-Dienstes für den Nutzer. Das Freigeben erfolgt, wenn Folgendes gegeben ist: der Vergleichs-Hash-Wert entspricht dem Hash-Wert; das elektronische Zertifikat für den zweiten öffentlichen Schlüssel ist in der logischen Datenstruktur enthalten; und das elektronische Zertifikat für den zweiten öffentlichen Schlüssel und das elektronische Zertifikat für den dritten öffentlichen Schlüssel werden jeweils als gültig geprüft.

Des Weiteren kann vorgesehen sein, dass der Online-Dienst nur für den Nutzer freigegeben wird, wenn zusätzlich die digitale Signatur der logischen Datenstruktur verifiziert ist und / oder das elektronische Zertifikat für den dritten öffentlichen Schlüssel in der logischen Datenstruktur enthalten ist.

Bei den verschiedenen Verfahrensausgestaltungen kann weiterhin kann Folgendes vorgesehen sein: Erzeugen eines Schlüsselpaars aus einem vierten öffentlichen Schlüssel und einem vierten privaten Schlüssel, welche einer dritten Public-Key-Infrastruktur zugeordnet sind, und eines elektronischen Zertifikats für den vierten öffentlichen Schlüssel durch die Personalisierungs-Applikation; Erzeugen einer digitalen Signatur des elektronischen Zertifikats für den vierten öffentlichen Schlüssel mittels des der zweiten Public-Key-Infrastruktur zugeordneten privaten Schlüssels durch die Personalisierungs-Applikation; Erweitern der logischen Datenstruktur durch die Personalisierungs-Applikation, sodass die logische Datenstruktur außerdem Folgendes umfasst: das elektronische Zertifikat für den vierten öffentlichen Schlüssel und die digitale Signatur des elektronischen Zertifikats für den vierten öffentlichen Schlüssel; Verschlüsseln des elektronischen Zertifikats für den vierten öffentlichen Schlüssel und des vierten privaten Schlüssels mit dem zweiten öffentlichen Schlüssel durch die Personalisierungs-Applikation; Übertragen des verschlüsselten elektronischen Zertifikats für den vierten öffentlichen Schlüssel und des verschlüsselten vierten privaten Schlüssels von der Personalisierungs-Applikation an die Identifikations-Applikation auf dem Endgerät; und Entschlüsseln des elektronischen Zertifikats für den vierten öffentlichen Schlüssel und des verschlüsselten vierten privaten Schlüssels mit dem zweiten privaten Schlüssel und Speichern in der lokalen Speichereinrichtung des Endgeräts. Alternativ kann hierbei auf ein Verschlüsseln des elektronischen Zertifikats oder der elektronischen Zertifikate verzichtet werden. Beispielweise kann nur die elektronische Datenstruktur verschlüsselt werden.

Es kann hierbei vorgesehen sein, dass beim Erweitern der logischen Datenstruktur eine digitale Signatur der logischen Datenstruktur erzeugt wird.

Es kann auch vorgesehen sein, dass das elektronische Zertifikat für den zweiten öffentlichen Schlüssel zusammen mit dem elektronischen Zertifikat für den dritten öffentlichen Schlüssel und dem elektronischen Zertifikat für den vierten öffentlichen Schlüssel als personalisierte elektronische Identität für eine Identifizierung des Nutzers gegenüber einem Online-Dienstleister verwendet wird, wobei hierbei Folgendes vorgesehen ist: Bereitstellen einer Dienstleister-Applikation auf einer der Datenverarbeitungseinrichtungen des Systems; Ausbilden einer weiteren gegenseitig authentisierten Datenkommunikationsverbindung zwischen der Identifikations-Applikation auf dem Endgerät und der Dienstleister-Applikation als Reaktion auf das Empfangen einer Anfrage zum Nutzen einer über die Dienstleister-Applikation bereitgestellten Online-Dienstleistung durch die Dienstleister-Applikation; Übertragen der logischen Datenstruktur mit dem hiervon umfassten Hash-Wert für das Identitätsattribut sowie des Identitätsattributs von der Identifikations-Applikation an die Dienstleister-Applikation; Prüfen, durch die Personalisierungs-Applikation, auf Gültigkeit des elektronischen Zertifikats (*Cert_{ID_app})* für den zweiten öffentlichen Schlüssel mittels der dritten Public-Key-Infrastruktur *(PKI_{3.1}),* des elektronischen Zertifikats *(Cert_{Perso_Ident})* für den dritten öffentlichen Schlüssel mittels der ersten Public-Key-Infrastruktur *(PKI_{3.2})* sowie des elektronischen Zertifikats *(Cer-t_{ID_TLS_client})* für den vierten öffentlichen Schlüssel mittels der zweiten Public-Key-Infrastruktur *(PKI_{3.3});* Berechnen eines Vergleichs-Hash-Werts für das von der Identifikations-Applikation erhaltene Identitätsattribut durch die Dienstleister-Applikation und Vergleichen des Vergleichs-Hash-Werts mit dem Hash-Wert für das Identitätsattribut in der logischen Datenstruktur und Freigeben des Online-Dienstes für den Nutzer. Das Freigeben erfolgt, wenn Folgendes gegeben ist: der Vergleichs-Hash-Wert entspricht dem Hash-Wert; die digitale Signatur der logischen Datenstruktur ist verifiziert; das elektronische Zertifikat (*Cert_{ID_app}*) für den zweiten öffentlichen Schlüssel und das elektronische Zertifikat *(Cert_{ID_TLS_client})* für den vierten öffentlichen Schlüssel sind in der logischen Datenstruktur enthalten; und das elektronische Zertifikat (*Cert_{ID_app})* für den zweiten öffentlichen Schlüssel und das elektronische Zertifikat für den vierten öffentlichen Schlüssel (*Cert_{ID_TLS_client})* werden jeweils als gültig geprüft.

Es kann weiterhin vorgesehen sein, dass der Online-Dienst nur für den Nutzer freigegeben wird, wenn zusätzlich das elektronische Zertifikat (*Cert_{Perso_Ident})* für den dritten öffentlichen Schlüssel in der logischen Datenstruktur enthalten ist.

In einer Ausgestaltung kann ein System mit Datenverarbeitungseinrichtungen und einem einem Endnutzer zugeordneten Endgerät vorgesehen sein, bei dem eine Identifikations-Applikation auf dem Endgerät und weiterhin eine Personalisierungs-Applikation sowie eine Identitätsprovider-Applikation installiert oder implementiert sind, wobei das System mittels der Applikationen eingerichtet ist, das Verfahren zum sicheren Bereitstellen einer personalisierten elektronischen Identität auf dem Endgerät auszuführen. Hinsichtlich möglicher Ausgestaltungen gelten die vorangehend in Verbindung mit dem Verfahren erläuterten Ausführungen entsprechend.

Es kann weiterhin ein Computerprogramm-Produkt vorgesehen sein, welches Programmcode oder -anweisungen enthält, welcher eingerichtet ist, beim Laden in einem System von Datenverarbeitungseinrichtungen das Verfahren zum sicheren Bereitstellen einer personalisierten elektronischen Identität auf dem Endgerät und / oder die Verwendung die elektronischen Identität auszuführen.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung von Endgeräten eines Nutzers und Datenverarbeitungseinrichtungen zur Bereitstellung und Verwendung einer elektronischen Identität;
- Fig. 2: eine schematische Darstellung zur Bereitstellung einer Software-Applikation für eine elektronische Identität auf einem Endgerät;
- Fig. 3: eine schematische Darstellung für ein Verfahren zur Bereitstellung der elektronischen Identität auf dem Endgerät;
- Fig. 4: eine schematische Darstellung zur Identifikation und/oder Authentisierung mittels der elektronischen Identität gegenüber einem Online-Dienst;
- Fig. 5: eine schematische Darstellung für ein Verfahren zur Bereitstellung der elektronischen Identität auf dem Endgerät unter Benutzung von zwei Public-Key-Infrastrukturen;
- Fig. 6: eine schematische Darstellung zur Identifikation und/oder Authentisierung mittels der elektronischen Identität gegenüber einem Online-Dienst unter Benutzung von zwei Public-Key-Infrastrukturen;
- Fig. 7: eine schematische Darstellung für ein Verfahren zur Bereitstellung der elektronischen Identität auf dem Endgerät unter Benutzung von drei Public-Key-Infrastrukturen;
- Fig. 8: eine schematische Darstellung zur Identifikation und/oder Authentisierung mittels der elektronischen Identität gegenüber einem Online-Dienst unter Benutzung von drei Public-Key-Infrastrukturen.

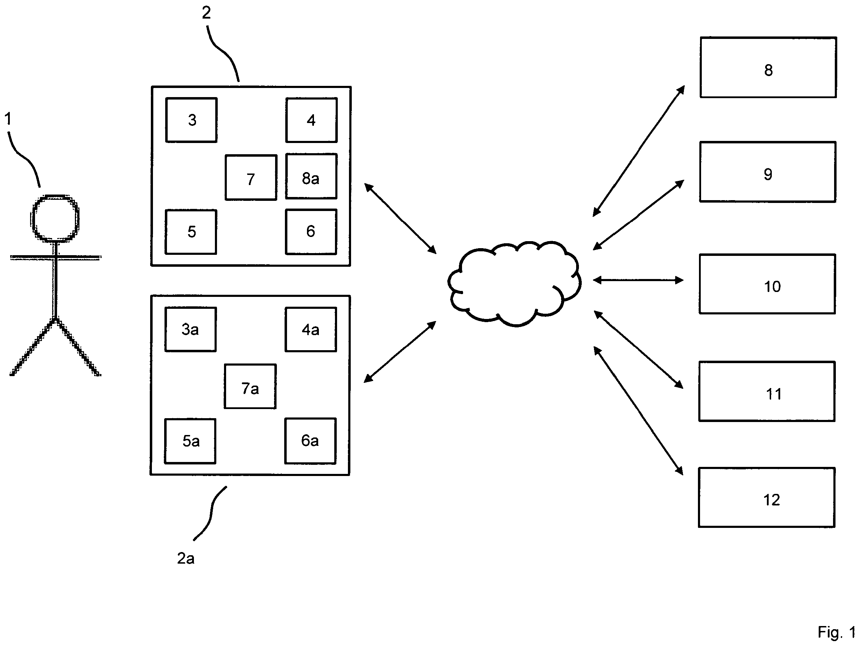

Fig. 1 zeigt eine schematische Darstellung eines Systems mit Endgeräten eines Nutzers 1 und Datenverarbeitungseinrichtungen zum Bereitstellen und zum Verwenden einer (personalisierten) elektronischen Identität, die auf einem der Endgeräte in einem Datenspeicher gespeichert ist. Die elektronische Identität ist schließlich personalisiert, also dem Nutzer 1 zugeordnet, so dass dieser für die Nutzung von Online-Dienstleistungen hiermit seine Identität nachweisen kann.

Ein Endgerät 2 des Nutzers 1 weist eine Eingabeeinrichtung 3, eine Ausgabeeinrichtung 4, eine Kommunikationseinrichtung 5 und einen Datenspeicher 6, eine Recheneinrichtung 7 mit mindestens einem Prozessor und eine Kamera 8a auf. Ein weiteres Endgerät 2a des Nutzers 1 weist eine Eingabeeinrichtung 3a, eine Ausgabeeinrichtung 4a, eine Kommunikationseinrichtung 5a und einen Datenspeicher 6a und eine Recheneinrichtung 7a mit mindestens einem Prozessor auf. Bei dem Endgerät 2 kann es sich zum Beispiel um ein mobiles Endgerät handeln. Bei dem Endgerät 2a kann es sich zum Beispiel um einen Personalcomputer handeln.

Das Endgerät 2 bzw. 2a kann mittels der jeweiligen Kommunikationseinrichtung 5 bzw. 5a mit einer elektronischen Datenverarbeitungseinrichtung 8 einer digitalen Plattform, einer elektronischen Datenverarbeitungseinrichtung 9 eines netzbasierten Personalisierungsdienstes und einer elektronischen Datenverarbeitungseinrichtung 10 einer Registrierungswebseite elektronisch kommunizieren. Die Datenverarbeitungseinrichtung 9 kann als verteiltes System ausgebildet sein. Es kann auch vorgesehen sein, dass die elektronische Datenverarbeitungseinrichtung 9 und die elektronischen Datenverarbeitungseinrichtung 10 dieselbe elektronische Datenverarbeitungseinrichtung darstellen, Des Weiteren können die Endgeräte 2, 2a mit einer elektronischen Datenverarbeitungseinrichtung 11 eines Identitätsproviders sowie mit einer elektronischen Datenverarbeitungseinrichtung 12 eines weiteren Online-Dienstes, welcher beliebige Online-Dienstleistungen anbieten kann, elektronisch kommunizieren. Die Datenverarbeitungseinrichtungen 8 bis 12 können auch untereinander elektronisch kommunizieren.

Auf dem System mit dem oder den Endgeräten 2, 2a sowie den Datenverarbeitungseinrichtungen sind mehrere software-implementierte Applikationen implementiert, insbesondere eine Registrierungs-Applikation (zum Beispiel die Registrierungswebseite bereitstellend), eine Personalisierungs-Applikation (insbesondere den Service des Personalisierungsdienstes bereitstellend) und eine Identitätsprovider-Applikation (insbesondere den Service des Identitätsproviders bereitstellend). Die Applikationen werden bei den nachfolgend beschriebene Prozessen und Verfahren genutzt.

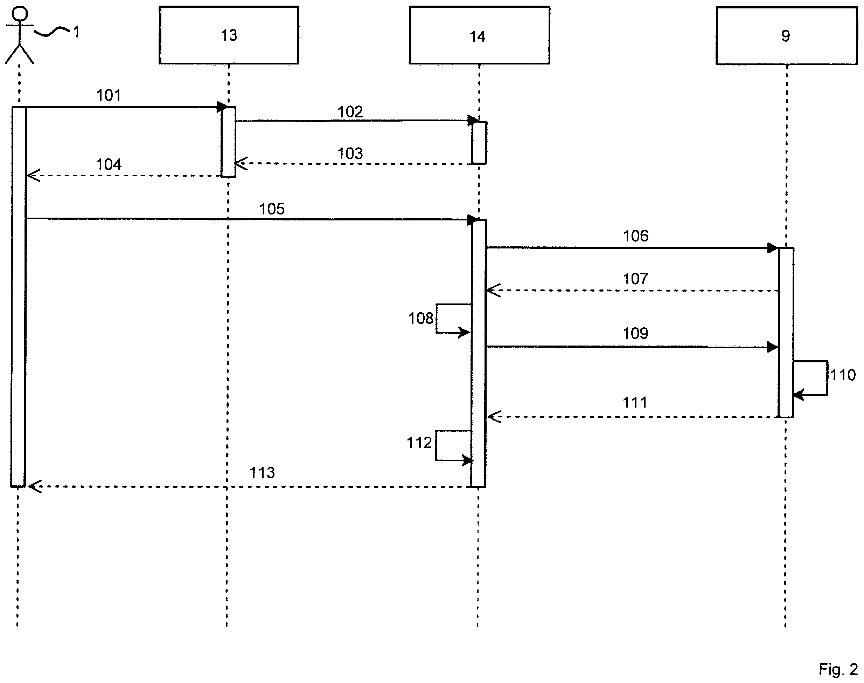

Fig. 2 zeigt eine schematische Darstellung zum Bereitstellen einer Identifikations-Applikation 14, die nachfolgend vereinfacht auch als Software-Applikation 14 bezeichnet wird, für eine elektronische Identität auf dem Endgerät 2 des Nutzers 1.

Zunächst ist von einer digitalen Plattform die Software-Applikation 14 im Datenspeicher 6 des Endgeräts 2 zu installieren. Bei der digitalen Plattform kann es sich zum Beispiel um einen App Store für Software-Applikationen handeln, die nach Abruf und Installation auf Endgeräten von Benutzern ausgeführt werden können. Hierzu wird in einem ersten Schritt 101 mittels der Eingabeeinrichtung 3 des Endgeräts 2 vom Nutzer 1 von einer Software-Applikation 13 der digitalen Plattform die Software-Applikation 14 angefordert, die auf der Datenverarbeitungseinrichtung 8 der digitalen Plattform gespeichert ist. Die Software-Applikation 13 kann auf dem Endgerät 2 installiert sein. Anschließend wird von der Software-Applikation 13 der Installationsvorgang der Software-Applikation 14 auf dem Endgerät 2 des Nutzers 1 gestartet (Schritt 102).

Nach Abschluss der Installation der Software-Applikation 14 auf dem Endgerät 2 des Nutzers 1 (Schritt 103) benachrichtigt die Software-Applikation 13 den Nutzer 1 hierüber (Schritt 104). Nachfolgend startet die Software-Applikation 14 zum ersten Mal (Schritt 105).

Die Software-Applikation 14 stellt eine sichere Verbindung zur Datenverarbeitungseinrichtung 9 des Personalisierungsdienstes her. Zur Ausbildung der Verbindung wird in der Datenverarbeitungseinrichtung 9 ein Zertifikat *Cert_{Persoseivice}* des Personalisierungsdienstes mit einem eindeutigen Bezeichner (Fingerprint) verglichen und hierdurch verifiziert (Certificate Pinning, Schritt 106). Bei dem Fingerprint kann es sich zum Beispiel um eine Hash-Funktion handeln. Der Fingerprint ist im Datenspeicher 6 des Endgeräts 2 gespeichert, wahlweise in verschlüsselter Form, derart, dass lediglich die Software-Applikation 14 auf den Fingerprint zugreifen kann. Die sichere Verbindung kann beispielsweise mittels des TLS-Protokolls (Transport Layer Security) hergestellt werden. Alternativ können zur sicheren Verbindung auch andere Protokolle wie zum Beispiel PACE (Password-Authenticated Connection Establishment) oder EAC (Extended Access Control) eingesetzt werden

Im Anschluss fordert die Datenverarbeitungseinrichtung 9 des Personalisierungsdienstes die Software-Applikation 14 auf, ein gerätegebundenes, asymmetrisches erstes Schlüsselpaar (*pk_{ID_prov}, sk_{ID_prov}*) mit einem öffentlichen Schlüssel *pk_{ID_prov}* und einem privaten Schlüssel *sk_{ID_prov}* zu erzeugen (Schritt 107).

Im folgenden Schritt 108 wird von der Software-Applikation 14 das erste Schlüsselpaar (*pk_{ID_prov}*, *sk_{ID-prov}*) erzeugt. Anschließend werden der öffentliche Schlüssel *pk_{ID_prov}* und eine eindeutige Gerätekennung *IDₐₚₚ* zur Datenverarbeitungseinrichtung 9 gesendet (Schritt 109). Die Gerätekennung *IDₐₚₚ* ist im Sinne der hier beschriebenen Technologie dahingehend eindeutig, als dass sie im Rahmen der vom Personalisierungsdienst bereitgestellten Dienstleistung als eindeutige (nur einmal vergebene) Gerätekennung dient.

in Schritt 110 erzeugt die Datenverarbeitungseinrichtung 9 ein digitales Zertifikat *Cer-t_{ID_app_prov}* basierend auf dem öffentlichen Schlüssel *pk_{ID_prov}* und speichert das Zertifikat *Cer-t_{ID_app_prov}* in einer internen Datenbank. Hierbei kann es sich insbesondere um ein digitales Zertifikat nach dem X.509-v3 Standard handeln. Ein solches Zertifikat umfasst eine Zertifikatsversion, eine Seriennummer, eine Algorithmen-ID, eine Ausstellerbezeichnung, Gültigkeitsdaten, Zertifikatsinhaber-Bezeichnungen und -Schlüsselinformationen, zusätzliche Erweiterungen und Attribute sowie Zertifikat-Signaturalgorithmus und Zertifikat-Signatur. Des Weiteren kann ein solches Zertifikat eindeutige Kennungen von Aussteller und Inhaber umfassen. Das Zertifikat *Cert_{ID_app_prov}* beinhaltet insbesondere die Gerätekennung *IDₐₚₚ.* Des Weiteren wird von der Datenverarbeitungseinrichtung 9 ein verschlüsseltes Zertifikat *enc(Cert_{ID_app_prov}, pk_{ID_prov})* mittels des öffentlichen Schlüssels *pk_{ID_prov}* erzeugt. Anschließend sendet Datenverarbeitungseinrichtung 9 das verschlüsselte Zertifikat *enc(Cert_{ID_app_prov,}pk)* zurück zur Software-Applikation 14 (Schritt 111).

In Schritt 112 entschlüsselt die Software-Applikation 14 das verschlüsselte Zertifikat *enc(Cert_{ID}, pk_{ID_prov})* mit dem privaten Schlüssel *sk_{ID_prov},* sodass das Zertifikat *Cert_{ID_app_prov}* erzeugt wird, und speichert das Zertifikat *Cert_{ID_app_prov},* welches die Gerätekennung *IDₐₚₚ* beinhaltet, im Datenspeicher 6 des Endgeräts 2. Abschließend zeigt die Software-Applikation 14 an, dass das Verfahren erfolgreich abgeschlossen wurde (Schritt 113). Hierzu zeigt die Software-Applikation 14 die Gerätekennung *IDₐₚₚ* auf der Ausgabeeinrichtung 4 des Endgeräts 2, zum Beispiel einem Bildschirm, an. Die Gerätekennung *IDₐₚₚ* kann zur Bereitstellung der elektronischen Identität des Nutzers 1, insbesondere mittels des im Folgenden beschriebenen Verfahrens, eingesetzt werden.

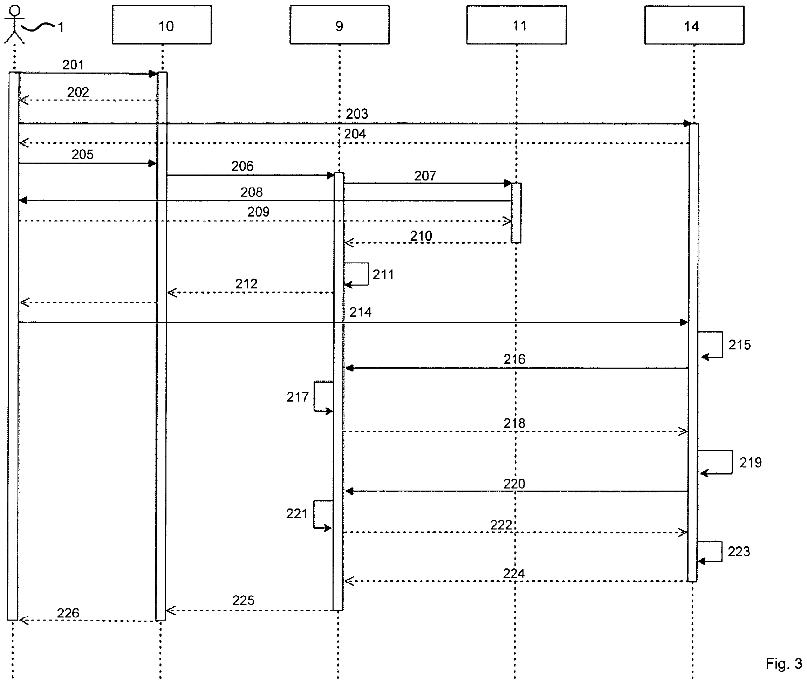

Fig. 3 zeigt eine schematische Darstellung für ein Verfahren zur Bereitstellung der elektronischen Identität auf dem Endgerät 2. Mittels des Verfahrens wird die elektronische Identität des Nutzers 1 in der bereits auf dem Endgerät 2 installierten Software-Applikation 14 registriert. Hierzu muss die Software-Applikation 14 auf dem Endgerät 2 bereitgestellt sein.

In einem ersten Schritt 201 wird vom Nutzer 1 mittels der Eingabeeinrichtung 3a des Endgeräts 2a eine Verbindung zur Datenverarbeitungseinrichtung 10 hergestellt und eine Webseite aufgerufen, die sich auf der Datenverarbeitungseinrichtung 10 befindet. Der Aufruf der Webseite kann beispielsweise mittels eines Webbrowsers erfolgen, der auf dem Endgerät 2a installiert ist. Im Anschluss sendet die Datenverarbeitungseinrichtung 10 an die Ausgabeeinrichtung 4a des Endgeräts 2a eine Aufforderung an den Nutzer 1, die Software-Applikation 14 auf dem Endgerät 2 zu öffnen (Schritt 202), um mittels der Eingabeeinrichtung 3a des Endgeräts 2a die Gerätekennung *IDₐₚₚ* auf der Webseite eingeben zu können. Des Weiteren können in Schritt 202 zusätzliche Informationen angefordert werden, welche zur Personalisierung der elektronischen Identität hinzugefügt werden können. Die zusätzlichen Informationen können zum Beispiel um Führerscheindaten, Personalausweisdaten, Matrikelnummern, Fotos oder Unterschriften beinhalten. Außerdem wird der Nutzer 1 in Schritt 202 aufgefordert, einen unterstützten Identitätsprovider auszusuchen.

Im folgenden Schritt 203 wird vom Nutzer 1 die Software-Applikation 14 auf dem Endgerät 2 geöffnet, um auf die Gerätekennung *IDₐₚₚ* Zugriff zu erhalten. Der Nutzer 1 liest die Gerätekennung *IDₐₚₚ* (Schritt 204) und gibt alle von der Datenverarbeitungseinrichtung 10 in Schritt 202 angeforderten Informationen mittels der Eingabeeinrichtung 3a auf der Webseite ein (Schritt 205). Die Datenverarbeitungseinrichtung 10 sendet nun die vom Nutzer 1 eingegebenen Informationen und die Gerätekennung *IDₐₚₚ* zur Datenverarbeitungseinrichtung 9 des Personalisierungsdienstes (Schritt 206). Die Datenverarbeitungseinrichtung 9 des Personalisierungsdienstes fordert Identitätsattribute *attr_{ID}* des Nutzers 1 von der Datenverarbeitungseinrichtung 11 des Identitätsprovider an (Schritt 207). Alternativ kann das Merkmal *attr_{ID}* auch nur ein einziges Identitätsattribut umfassen. Die Datenverarbeitungseinrichtung 11 des Identitätsproviders fragt daraufhin eine Erlaubnis des Nutzers 1 an, die Identitätsattribute *attr_{ID}* an die Datenverarbeitungseinrichtung 9 des Personalisierungsdienstes zu senden (Schritt 208). Hierbei kann der Nutzer 1 zum Genehmigen (Erteilen der Erlaubnis) zum Beispiel seinen mittels eines Lesegeräts auslesbaren Personalausweis nutzen.

Wenn der Nutzer 1 die Datenverarbeitungseinrichtung 11 des Identitätsproviders autorisiert hat, die Identitätsattribute *attr_{ID}* zur Datenverarbeitungseinrichtung 9 des Personalisierungsdienstes zu senden (Schritt 209), sendet die Datenverarbeitungseinrichtung 11 des Identitätsproviders die Identitätsattribute *attr_{ID}* zur Datenverarbeitungseinrichtung 9 des Personalisierungsdienstes (Schritt 210). Hierauf verarbeitet die Datenverarbeitungseinrichtung 9 des Personalisierungsdienstes die empfangenen Identitätsattribute *attr_{ID}* und fügt optional weitere Attribute hinzu (Schritt 211), zum Beispiel aus den Informationen, die in Schritt 205 vom Nutzer 1 mittels der Eingabeeinrichtung 3a im Endgerät 2a auf der Webseite eingegeben wurden. Des Weiteren erzeugt die Datenverarbeitungseinrichtung 9 des Personalisierungsdienstes in Schritt 211 einen 2D-Barcode, welcher eine Nonce (eine einmalig zu verwendende Zeichenfolge) *nonceₚₑᵣₛ* enthält, die mit dem öffentlichen Schlüssel *pk_{ID_prov}* (aus dem Endgerät 2, siehe Schritt 109) verschlüsselt wird. Der öffentliche Schlüssel wird hierzu aus dem Zertifikat *Cert*_{*ID*_*app*_*prov*}, welches die Gerätekennung *IDₐₚₚ* beinhaltet, gewonnen (vgl. Schritt 110). Durch den Einsatz von einmalig zu verwendenden Noncen wird die Sicherheit vor kryptoanalytischen Angriffen erhöht. Bei dem 2D-Barcode kann es sich beispielsweise um einen QR-Code oder einen Aztec-Code handeln Anstelle des 2D-Barcodes kann auch ein anderer optoelektronisch lesbarer Code verwendet werden, beispielsweise ein eindimensionaler Strichcode.

Im Anschluss sendet die Datenverarbeitungseinrichtung 9 des Personalisierungsdienstes den 2D-Barcode zur Datenverarbeitungseinrichtung 10 mit der Webseite (Schritt 212). Die Webseite zeigt den 2D-Barcode auf der Ausgabeeinrichtung 4a des Endgeräts 2a an und fordert des Weiteren den Nutzer 1 auf, den 2D-Barcode mittels der Software-Applikation 14 auf dem Endgerät 2 zu scannen (Schritt 213). Hierzu greift die Software-Applikation 14 auf die Kamera 8a des Endgeräts 2 zu. Sobald der Nutzer 1 den 2D-Barcode gescannt hat (Schritt 214), entschlüsselt die Software-Applikation 14 die Nonce *nonceₚₑᵣₛ*, welche in dem 2D-Barcode enthalten ist. Die Entschlüsselung erfolgt mit dem privaten Schlüssel *sk_{ID_prov}*, der zusammen mit dem öffentlichen Schlüssel *pk_{ID_prov}* das erste Schlüsselpaar bildet (Schritt 215). Hieraufhin stellt die Software-Applikation 14 eine sichere, gegenseitig authentifizierte Verbindung zur Datenverarbeitungseinrichtung 9 her (Schritt 216). Die Verbindung kann zum Beispiel mittels TLS, EAC oder PACE hergestellt werden. Zur Herstellung der Verbindung verifiziert die Software-Applikation 14 das Zertifikat *Cert_{Persoservice}* des Personalisierungsdienstes mit einem Fingerprint, der mit der Software-Applikation 14 im Datenspeicher 6 des Endgeräts 2 gespeichert ist (Certificate Pinning). Außerdem verifiziert die Datenverarbeitungseinrichtung 9 ein Zertifikat *Cert_{ID_app}* der Software-Applikation 14 mittels einer internen Datenbank. Weiterhin wird die Nonce *nonceₚₑᵣₛ* von der Software-Applikation 14 zur Datenverarbeitungseinrichtung 9 des Personalisierungsdienstes gesendet.

In Schritt 217 wird von der Datenverarbeitungseinrichtung 9 des Personalisierungsdienstes geprüft, ob die Nonce *nonceₚₑᵣₛ* gültig ist. Anschließend fordert die Datenverarbeitungseinrichtung 9 die Software-Applikation 14 auf, ein gerätegebundenes, asymmetrisches zweites Schlüsselpaar (*pk_{ID_app}, sk_{ID_app}*) zu erstellen (Schritt 218), woraufhin die Software-Applikation 14 das zweite Schlüsselpaar (*pk_{ID_app}, sk_{ID_app}*) erstellt (Schritt 219). Der öffentliche Schlüssel *pk_{ID}_ₐₚₚ* wird von der Software-Applikation 14 zur Datenverarbeitungseinrichtung 9 gesendet (Schritt 220)

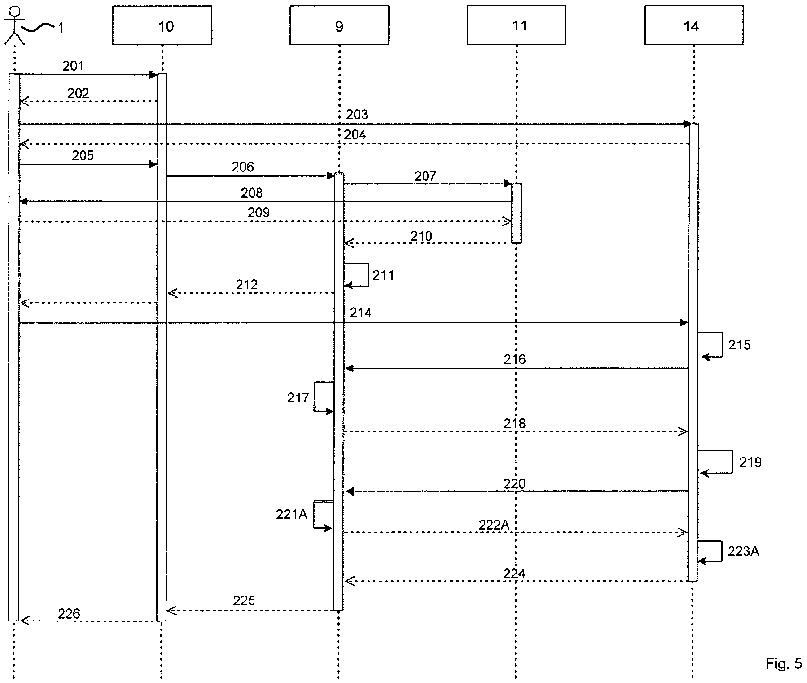

In Schritt 221 erstellt die Datenverarbeitungseinrichtung 9 ein Zertifikat *Cert_{ID_app}* für den öffentlichen Schlüssel *pk_{ID_app}* und speichert das Zertifikat *Cert_{ID_app}* in einer Public-Key-Infrastruktur (PKI) *PKI_{Ident}.* Es kann auch vorgesehen sein, dass die PKI auf mehreren Datenverarbeitungseinrichtungen verteilt ist. Bei einer PKI handelt es sich um ein System zum Ausstellen, Verteilen und Prüfen digitaler (elektronischer) Zertifikate. Das beschriebene Verfahren kann mit (lediglich) einer einzigen PKI ausgeführt werden. Alternativ kann die Verwendung weiterer PKI vorgesehen sein (vgl. insbesondere unten zu den Fig. 5 bis 8).

Bei dem Zertifikat *Cert_{ID_app}* kann es sich insbesondere um ein Zertifikat nach dem X.509v3-Standard handeln, welcher zusätzliche Attribute innerhalb von Zertifikaten vorsieht.

Das Zertifikat *Cert_{ID}_ₐₚₚ* kann Hashwerte jedes der Identitätsattribute *attr_{ID}* des Nutzers 1 beinhalten, welche mittels einer Hashfunktion aus den Identitätsattributen *attr_{ID}* berechnet werden. Auf diese Weise ist die elektronische Identität unter Verwendung eines digitalen Zertifikats bereitstellbar, welches für (zusätzliche) Attribute (Identitätsattribute) Hashwerte enthält.

Das Zertifikat *Cert_{ID_app}* mit den Hashwerten der Identitätsattribute *attr_{ID}* wird von der Datenverarbeitungseinrichtung 9 mittels des öffentlichen Schlüssels *pk_{ID_app}* zu einem verschlüsselten Zertifikat *enc*(*Cert_{lD_app}, pk_{ID_app}*) und die Identitätsattribute *attr_{ID}* zu verschlüsselten Identitätsattributen *enc*(*attr_{ID}, pk_{ID_app}*) verschlüsselt. Alternativ kann vorgesehen sein, dass Zertifikat *Cert_{ID_app}* nicht zu verschlüsseln.

Das verschlüsselte Zertifikat *enc*(*Cert_{ID_app}, pk_{ID_app}*) (oder alternativ das Zertifikat *Cert_{ID_app}*) sowie die verschlüsselten Identitätsattribute *enc*(*attr_{ID}, pk_{ID_app}*) werden von der Datenverarbeitungseinrichtung 9 zurück zur Software-Applikation 14 gesendet (Schritt 222).

Falls das Zertifikat *Cert_{ID_app}* verschlüsselt wurde und verschlüsselt gesendet wurde, entschlüsselt die Software-Applikation 14 in Schritt 223 das verschlüsselte Zertifikat *enc*(*Cert_{ID_app}, pk_{ID_app}*) mit dem privaten Schlüssel *sk_{ID_app}*. Die Software-Applikation 14 speichert das erhaltene Zertifikat *Cert_{ID_app}* im Datenspeicher 6 auf dem Endgerät 2. Des Weiteren entschlüsselt die Software-Applikation 14 die verschlüsselten Identitätsattribute *enc*(*attr_{ID}*, *pk_{ID_app}*) mit dem privaten Schlüssel *sk_{ID_app}* und speichert die entschlüsselten Identitätsattribute *attr_{ID}* mit einem gerätegebundenen symmetrischen Schlüssel *keyₐₜₜᵣ* auf dem Datenspeicher 6 des Endgeräts 2.

Im folgenden Schritt 224 meldet die Software-Applikation 14 dem Personalisierungsdienst 13 eine erfolgreiche Registrierung der elektronischen Identität des Nutzers 1 auf dem Endgerät 2. Der Personalisierungsdienst 13 meldet der Webseite 20 die erfolgreiche Registrierung der elektronischen Identität des Nutzers 1 auf dem Endgerät 2 (Schritt 225). Im abschließenden Schritt 226 meldet die Datenverarbeitungseinrichtung 10 dem Nutzer 1 über die Webseite die erfolgreiche Registrierung der elektronischen Identität des Nutzers 1 auf dem Endgerät 2.

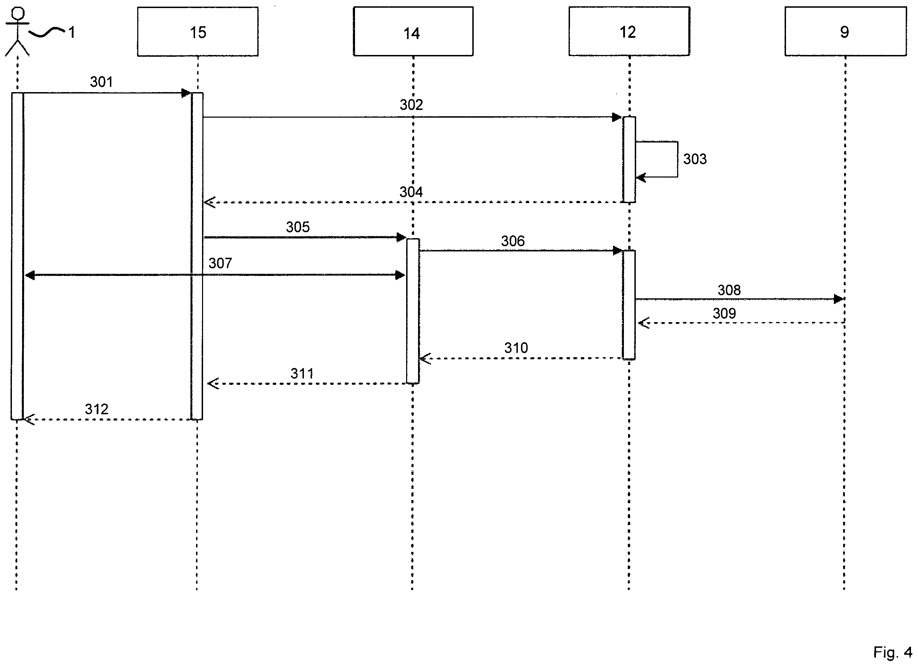

Fig. 4 zeigt eine schematische Darstellung zur Identifikation und Authentisierung mittels der elektronischen Identität des Nutzers 1, einem Webbrowser 15 des Nutzers 1 und der Software-Applikation 14 gegenüber der Datenverarbeitungseinrichtung 12 eines Online-Dienstes. Der Webbrowser 15 und die Software-Applikation 14 können sich auf demselben Endgerät 2 befinden. Alternativ kann sich der Webbrowser 15 auf einem weiteren Endgerät, beispielsweise dem Endgerät 2a, befinden.

In Schritt 301 kiickt der Nutzer 1 im Webbrowser 15 auf eine Schaltfläche auf der Webseite des Online-Dienstes. Der Webbrowser 15 sendet hierauf eine Login-Anfrage zur Datenverarbeitungseinrichtung 12 des Online-Dienstes über einen sicheren Kommunikationskanal (Schritt 302). Der sichere Kommunikationskanal kann zum Beispiel über TLS hergestellt sein.

Die Login-Anfrage beinhaltet eine Sitzungskennung *IDₛₑₛₛᵢₒₙ.* Die Identität des Online-Dienstes wird durch ein *Cert_{EV_ssrvice}* verifiziert. Hierbei kann es sich insbesondere um ein Extended-Validation-Zertifikat (EV-Zertifikat) nach X.509-Standard handeln, welches von einer Zertifizierungsstelle (certificate authority, CA) ausgestellt wurde.

Die Datenverarbeitungseinrichtung 12 speichert die Sitzungskennung *IDₛₑₛₛᵢₒₙ* und erzeugt ein Authentisierungsanfrage-Token *token_{auth_request}* (Schritt 303). Das Authentisierungsanfrage-Token *token_{auth_request}* beinhaltet alle Informationen, die benötigt werden, um die Authentisierung mit der Software-Applikation 14 auszuführen. Die Datenverarbeitungseinrichtung 12 sendet das Authentisierungsanfrage-Token *token_{auth_request}* zum Webbrowser 15 (Schritt 304).

In Schritt 305 wird, wenn sich die Software-Applikation 14 und der Webbrowser 15 auf dem gleichen Gerät befinden, eine gerätespezifische custom URL benutzt, um das Authentisierungsanfrage-Token *token_{auth_request}* zur Software-Applikation 14 zu senden. Die gerätespezifische custom URL kann zum Beispiel Folgendes umfassen: Typ, Methodenaufruf, Folge von Attributen, Bild des QR-Codes.

Wenn sich alternativ die Software-Applikation 14 und der Webbrowser 15 auf verschiedenen Geräten befinden, wird in Schritt 305 im Webbrowser 15 ein 2D-Barcode angezeigt, welcher das Authentisierungsanfrage-Token *token_{auth_request}* beinhaltet. Der 2D-Barcode ist anschließend vom Nutzer 1 mittels der Software-Applikation 14 und der Kamera 8a zu scannen. Anstelle des 2D-Barcodes kann auch ein anderer optoelektronisch lesbarer Code vorgesehen sein.

Nachdem die Software-Applikation 14 das Authentisierungsanfrage-Token *token_{auth_request}* empfangen hat, analysiert die Software-Applikation 14 das Authentisierungsanfrage-Token *token_{auth_request}* und extrahiert aus dem Authentisierungsanfrage-Token *token_{auth_request}* Informationen des Online-Dienstes (Schritt 306). Die Software-Applikation 14 verifiziert das EV-Zertifikat *Cert_{EV_service}* des Online-Dienstes und zeigt anschließend das EV-Zertifikat *Cert_{EV_service}* und/oder wesentliche Informationen zum EV-Zertifikat *Cert_{EV_service}* dem Nutzer 1 auf der Ausgabeeinrichtung 4 des Endgeräts 2 an. Mittels der extrahierten Informationen des Online-Dienstes baut die Software-Applikation 14 eine sichere, gegenseitig authentisierte Verbindung zur Datenverarbeitungseinrichtung 12 des Online-Dienstes auf. Die sichere, gegenseitig authentisierte Verbindung kann insbesondere als Mutual-TLS-authentication-Verbindung (mTLS) gestaltet sein.

Optional kann, bevor Schritt 306 ausgeführt wird, von der der Software-Applikation 14 eine Verbindung zwischen der Software-Applikation 14 und der Datenverarbeitungseinrichtung 12 aufgebaut werden, um das EV-Zertifikat *Cert_{EV}__{service}* von der Datenverarbeitungseinrichtung 12 anzufragen und zu validieren. In dieser optionalen Ausführung wird Schritt 306 erst nach erfolgter Validierung des EV-Zertifikats *Cert_{EV_service}* durchgeführt.

Mit den aus dem EV-Zertifikat *Cert_{EV_service}* extrahierten Informationen über den Dienst kann der Nutzer 1 die Authentisierungsanfrage akzeptieren (Schritt 307). Das Akzeptieren der Authentisierungsanfrage durch den Nutzer 1 kann beispielsweise in der Eingabeeinrichtung 3 mittels biometrischer Authentifizierung (etwa mittels Eingabe eines Fingerabdrucks des Nutzers 1) oder mittels einer vordefinierten Benutzer-PIN erfolgen. Wenn der Nutzer 1 die Authentisierungsanfrage akzeptiert, werden das Zertifikat *Cert_{ID_app}* der Software-Applikation 14 und die angefragten Identitätsattribute *attr_{ID}* zur Datenverarbeitungseinrichtung 12 gesendet (vgl. Schritt 306).

Anschließend sendet die Datenverarbeitungseinrichtung 12 eine Zertifikat-Gültigkeitsanfrage für das Zertifikat *Cert_{ID_app}* zur Datenverarbeitungseinrichtung 9 des Personalisierungsdienstes (Schritt 308). Die Datenverarbeitungseinrichtung 9 überprüft mittels der PKI *PKI_{Ident}* (vgl. Schritt 221) die Gültigkeit des Zertifikats *Cert_{ID_app}* und gibt ein Resultat der Prüfung der Gültigkeit des Zertifikats *Cert_{ID_app}* zurück zur Datenverarbeitungseinrichtung 12 (Schritt 309),

Die Datenverarbeitungseinrichtung 12 des Online-Dienstes überprüft nun, ob die gesendeten Identitätsattribute *attr_{ID}* gültig sind (Schritt 310). Diese Überprüfung erfolgt, indem aus den Identitätsattributen *attr_{ID}* mittels einer Hashfunktion Hashwerte berechnet werden und die berechneten Hashwerte mit im Zertifikat *Cert_{ID_app}* gespeicherten Hashwerten der Identitätsattribute *attr_{ID}* verglichen werden. Insbesondere kann es sich bei der Hashfunktion um dieselbe Hashfunktion wie in Schritt 221 handeln. Wenn die berechneten Hashwerte mit den im Zertifikat *Cert_{ID_app}* gespeicherten Hashwerten übereinstimmen, wird von der Datenverarbeitungseinrichtung 12 eine URI (Uniform Resource Identifier) zur Software-Applikation 14 gesendet. Falls die Hashwerte nicht übereinstimmen, wird der Vorgang abgebrochen.

Die erläuterte Reihenfolge der Authentisierung kann aus Datenschutzgründen vorgesehen sein. Hierbei findet zuerst die Authentisierung Datenverarbeitungseinrichtung 12 des Online-Dienstes (hier des Servers) mittels des Zertifikats *Cert_{EV_service}* statt, anschließend die Authentisierung der Software-Applikation 14 (hier des Clients) mittels des Zertifikats *Cert_{ID_app}.* Somit kann bei dieser möglichen Ausführungsform vermieden werden, personenbezogene Daten wie die Hashwerte der Identitätsattribute *attr_{ID}* im Zertifikat *Cert_{ID_app}* an einen nichtauthentisierten Server zu senden. Derartiges findet nicht statt.

Wenn die URI von der Datenverarbeitungseinrichtung 12 zur Software-Applikation 14 gesendet wurde, übergibt die Software-Applikation 14 die URI zusammen mit der Sitzungskennung *IDₛₑₛₛᵢₒₙ* dem Webbrowser 15 (Schritt 311). Hierauf lädt der Webbrowser 15 die empfangene URI (Schritt 312). Damit ist die Identifikation und Authentisierung mittels der elektronischen Identität abgeschlossen.

In weiteren Ausführungsbeispielen können statt der einen PKI *PKI_{Ident}* auch mehrere öffentlich zugängliche PKI eingesetzt werden. Insbesondere können zwei verschiedene PKI *PKI_{2.1}, PKI_{2.2}* sowie drei verschiedene PKI *PKI_{3.1}, PKI_{3.2}, PKI_{3.3}* eingesetzt werden. Durch die Verteilung einzelner Schritte auf verschiedene PKI kann der Datenschutz insbesondere hinsichtlich der potentiellen Nachverfolgbarkeit des Nutzers 1 verbessert werden, da nur unbedingt notwendige personenbezogene Daten (Personal Identifiable Information, PII) beim Kommunikationsaufbau verfügbar sind. Des Weiteren können beim Einsatz mehrerer PKI verschiedene private Schlüssel benutzt werden, die in verschiedenen Schlüsselspeichern des Endgeräts 2 gespeichert sein können. Die Extraktion mehrerer privater Schlüssel beim Einsatz mehrerer PKI bedeutet für einen Angreifer einen potentiell höheren Aufwand und führt somit zu erhöhter Sicherheit.

Die Schritte zur Bereitstellung der elektronischen Identität sowie zur Identifikation und Authentisierung mittels der elektronischen Identität, welche sich von den Schritten der Verfahren mit der nur einen PKI *PKI_{Ident}* unterscheiden, werden im Folgenden im Einzelnen dargelegt. Schritte, die Verfahren mit den zwei PKI *PKI_{2.1}, PKI_{2.2}* betreffen, sind hierbei mit dem Suffix "A" gekennzeichnet. Schritte, die Verfahren mit den drei PKI *PKI_{3.1}, PKI_{3.2}, PKI_{3.3}* betreffen, sind mit dem Suffix "B" gekennzeichnet. Die PKI können auf der Datenverarbeitungseinrichtung 9 gespeichert sein.

Die Schritte 101 bis 113 zur Bereitstellung der Software-Applikation 14 für eine elektronische Identität auf dem Endgerät 2 sowie die Schritte 201 bis 220 zur Bereitstellung der elektronischen Identität auf dem Endgerät 2 erfolgen bei mehreren PKI wie bei einer einzigen PKI.

Das vorangehend beschriebene Verfahren nutzt (nur) eine PKI (*Public-Key-Infrastructure*)*.* Nachfolgend werden unter Bezugnahme auf die Fig. 5 bis 8 Ausführungsbeispiele erläutert, bei denen mehrere PKI verwendet werden, insbesondere zwei und der PKI, also ein oder zwei zusätzliche PKI.

Fig. 5 zeigt eine schematische Darstellung für ein Verfahren zur Bereitstellung der elektronischen Identität auf dem Endgerät 2 unter Benutzung von zwei PKI *PKI_{2.1}, PKI_{2.2}.* Im Folgenden werden die hinsichtlich der beiden PKI *PKI_{2.1}, PKI_{2.2}* modifizierten Schritte 221A bis 223A zur Bereitstellung der elektronischen Identität erläutert. Die übrigen Schritte 201 bis 220 sowie 224 bis 226 zur Bereitstellung der elektronischen Identität auf dem Endgerät 2 erfolgen wie bei der Benutzung von einer einzigen PKI.

In Schritt 221A erzeugt die Datenverarbeitungseinrichtung 9 eines netzbasierten Personalisierungsdienstes ein Zertifikat *Cert_{ID_app}* für den öffentlichen Schlüssel *pk_{ID_app}* und speichert das Zertifikat *Cert_{ID_app}* in der PKI *PKI_{2.1}.*

Des Weiteren erzeugt die Datenverarbeitungseinrichtung 9 eine logische Datenstruktur *LDS₂,* umfassend Hashwerte jedes der Identitätsattribute *attr_{ID},* das Zertifikat *Cert_{ID_app},* sowie digitale Signaturen der Hashwerte der Identitätsattribute *attr_{ID}* und des Zertifikats *Cert_{ID_app}* mittels eines privaten Schlüssels *sk_{Penso_Ident}.* Ein dem privaten Schlüssel *sk_{Perso_Ident}* entsprechender öffentlicher Schlüssel *pk_{Perso_Ident}* ist Teil eines Zertifikats *Cert_{Perso_Ident}* des Personalisierungsdienstes und ist in der PKI *PKI_{2.2}* veröffentlicht. Des Weiteren wird eine digitale Signatur der logischen Datenstruktur *LDS₂* mittels des privaten Schlüssels *sk_{Perso_Ident}* erzeugt.

Die logische Datenstruktur *LDS₂*, die Zertifikate *Cert_{ID_app}* und *Cert_{Perso-_Ident}* sowie die Identitätsattribute *attr_{ID}* werden anschließend von der Datenverarbeitungseinrichtung 9 jeweils mittels des öffentlichen Schlüssels *pk_{ID_app}* zu einer verschlüsselten Datenstruktur *enc*(*LDS₂, pk_{ID_app}*), verschlüsselten Zertifikaten *enc*(*Cert_{ID_app}, pk_{ID_app}*) und *enc*(*Cert_{Perso_Ident}, pk_{ID_app}*) sowie verschlüsselten Identitätsattributen *enc*(*attr_{ID}, pk_{ID_app}*) verschlüsselt.

In Schritt 222A werden die verschlüsselte Datenstruktur *enc*(*LDS₂*, *pk*_{*ID*_*app*}), die verschlüsselten Zertifikate *enc*(*Cert_{ID_app}, pk_{ID_app}*) und *enc*(*Cert_{Perso_Ident}, pk_{ID_app}*) sowie die verschlüsselten Identitätsattribute *enc*(*attr_{ID}, pk_{ID_app}*) von der Datenverarbeitungseinrichtung 9 zurück zur Software-Applikation 14 übertragen.

In Schritt 223A werden die verschlüsselte Datenstruktur *enc*(*LDS₂, pk_{ID_app}*) sowie die verschlüsselten Zertifikate *enc*(*Cert_{ID_app}, pk_{ID_app}*) und *enc*(*Cert_{Perso_Ident}, pk_{ID_app}*) von der Software-Applikation 14 mit dem privaten Schlüssel *sk_{ID_app}* entschlüsselt und im Datenspeicher 6 auf dem Endgerät 2 gespeichert. Des Weiteren entschlüsselt die Software-Applikation 14 die verschlüsselten Identitätsattribute *enc*(*attr_{ID}, pk_{ID_app}*) mit dem privaten Schlüssel *sk_{ID_app}* und speichert die entschlüsselten Identitätsattribute *attr_{ID}* mit einem gerätegebundenen symmetrischen Schlüssel *keyₐₜₜᵣ* auf dem Datenspeicher 6 des Endgeräts 2.

Die übrigen Schritte 224 bis 226 zur Bereitstellung der elektronischen Identität auf dem Endgerät 2 erfolgen wie bei einer einzigen PKI.

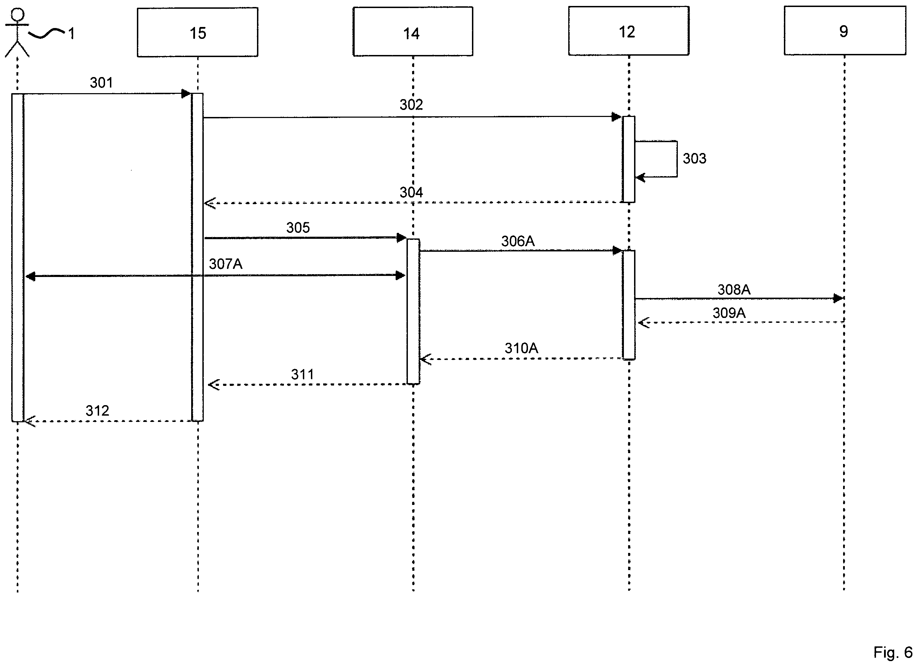

Fig. 6 zeigt eine schematische Darstellung zur Identifikation und/oder Authentisierung mittels der elektronischen Identität gegenüber einem Online-Dienst unter Benutzung der beiden PKI *PKI_{2.1}, PKI_{2.2}.* Im Folgenden werden die hinsichtlich der beiden PKI *PKI_{2.1}, PKI_{2.2}* modifizierten Schritte 306A bis 310A zur Identifikation und Authentisierung mittels der elektronischen Identität erläutert. Die übrigen Schritte 301 bis 305 sowie 311 und 312 zur Bereitstellung der elektronischen Identität auf dem Endgerät 2 erfolgen wie bei einer einzigen PKI.

In Schritt 306A analysiert die Software-Applikation 14 das Authentisierungsanfrage-Token *token_{auth_request}* und extrahiert aus dem Authentisierungsanfrage-Token *token_{auth_request}* Informationen des Online-Dienstes. Mittels der extrahierten Informationen des Online-Dienstes baut die Software-Applikation 14 eine sichere, gegenseitig authentisierte Verbindung zur Datenverarbeitungseinrichtung 12 des Online-Dienstes auf. An dieser Stelle kann insbesondere der Standard-Protokollablauf für TLS mit einer Client-Authentisierung vor einer Server-Authentisierung genutzt werden, da das Zertifikat *Cert_{ID_app}* keine personenbezogenen Daten enthält und sich die Hashwerte der Identitätsattribute *attr_{ID}* lediglich in der logischen Datenstruktur *LDS₂* befinden. Somit können die Identitätsattribute *attr_{ID}* nicht zu einem nichtauthentisierten Server gelangen.

In Schritt 307A kann der Nutzer 1 mit den aus dem EV-Zertifikat *Cert_{EV_service}* extrahierten Informationen über den Dienst die Authentisierungsanfrage akzeptieren. Das Akzeptieren der Authentisierungsanfrage durch den Nutzer 1 kann beispielsweise in der Eingabeeinrichtung 3 mittels biometrischer Authentifizierung (etwa mittels Eingabe eines Fingerabdrucks des Nutzers 1) oder mittels einer vordefinierten Benutzer-PIN erfolgen. Wenn der Nutzer 1 die Authentisierungsanfrage akzeptiert, werden die logische Datenstruktur *LDS₂* und die angefragten Identitätsattribute *attr_{ID}* zur Datenverarbeitungseinrichtung 12 gesendet.

In Schritt 308A sendet die Datenverarbeitungseinrichtung 12 eine Zertifikat-Gültigkeitsanfrage für das Zertifikat *Cert_{ID_app}* zur PKI *PKI_{2.1}* und eine weitere Zertifikat-Gültigkeitsanfrage für das Zertifikat *Cert_{Perso_Ident}* zur PKI *PKI_{2.2}*.

In Schritt 309A überprüft die Datenverarbeitungseinrichtung 9 jeweils mittels der PKI *PKI_{2.1}* die Gültigkeit des Zertifikats *Cert_{ID_app}* und mit der *PKI_{2.2}* die Gültigkeit des Zertifikats *Cert_{Per-so_Ident}* und gibt Resultate der Prüfung der jeweiligen Gültigkeit der Zertifikate *Cert_{ID_app}* und *Cert_{Perso_Ident}* zurück zur Datenverarbeitungseinrichtung 12.

In Schritt 310A überprüft die Datenverarbeitungseinrichtung 12 des Online-Dienstes, ob die gesendeten Identitätsattribute *attr_{ID}* gültig sind. Diese Überprüfung erfolgt, indem aus den Identitätsattributen *attr_{ID}* mittels einer Hashfunktion Hashwerte berechnet werden und die berechneten Hashwerte mit den in der logischen Datenstruktur *LDS₂* gespeicherten Hashwerten der Identitätsattribute *attr_{ID}* verglichen werden. Des Weiteren verifiziert die Datenverarbeitungseinrichtung 12 die Signatur der logischen Datenstruktur *LDS₂* und überprüft, ob das Zertifikat *Cert_{ID_app}* in der logischen Datenstruktur *LDS₂* enthalten ist.

Wenn die berechneten Hashwerte mit den in der logischen Datenstruktur *LDS₂* gespeicherten Hashwerten übereinstimmen, die Signatur der logischen Datenstruktur *LDS₂* verifiziert ist, das Zertifikat *Cert_{ID_app}* in der logischen Datenstruktur *LDS₂* enthalten ist und das Zertifikat *Cert_{ID_app}* validiert wurde, wird von der Datenverarbeitungseinrichtung 12 eine URI zur Software-Applikation 14 gesendet. Anderenfalls wird der Vorgang abgebrochen.

Die übrigen Schritte 311 und 312 erfolgen wie bei einer einzigen PKI.

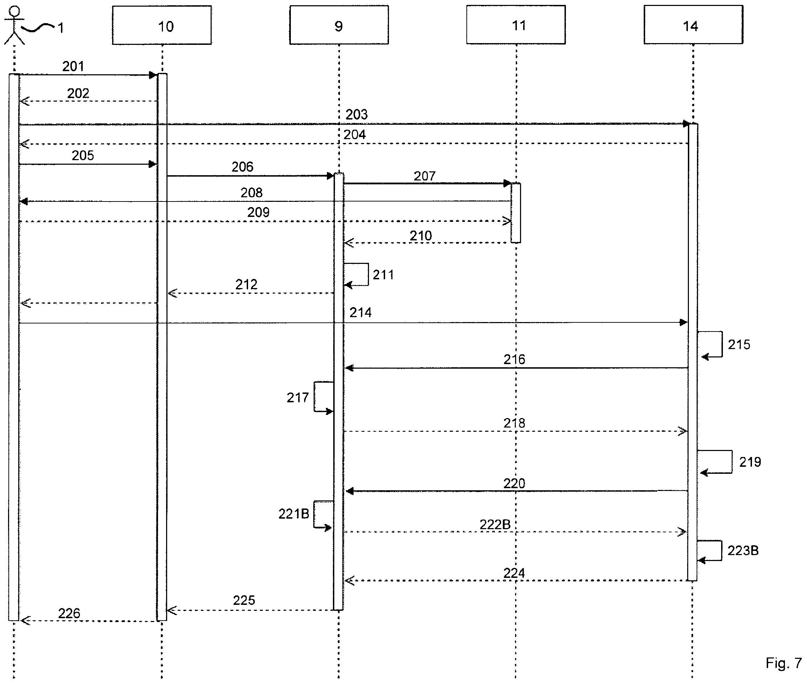

Fig. 7 zeigt eine schematische Darstellung für ein Verfahren zur Bereitstellung der elektronischen Identität auf dem Endgerät 2 unter Benutzung von drei PKI *PKI_{3.1}, PKI_{3.2}, PKI_{3.3},* Im Folgenden werden die hinsichtlich der drei PKI *PKI_{3.1}, PKI_{3.2}, PKI_{3.3}* modifizierten Schritte 221B bis 223B zur Bereitstellung der elektronischen Identität erläutert. Die übrigen Schritte 201 bis 220 sowie 224 bis 226 zur Bereitstellung der elektronischen Identität auf dem Endgerät 2 erfolgen wie bei der Benutzung von einer einzigen PKI.

In Schritt 221B wählt die Datenverarbeitungseinrichtung 9 ein Schlüsselpaar aus privatem Schlüssel *sk_{ID_TLS_client}* und öffentlichem Schlüssel *pk_{ID_TLS_client}.* Für den öffentlichen Schlüssel *pk_{ID_TLS_client}* erzeugt die Datenverarbeitungseinrichtung 9 ein Zertifikat *Cert_{ID_TLS_client}* und speichert das Zertifikat *Cert_{ID_TLS_client}* in der PKI *PKI_{3.1}.* Die PKI *PKI_{3.1}* beinhaltet hierbei nicht den öffentlichen Schlüssel *pk_{ID_app}.* Des Weiteren erzeugt die Datenverarbeitungseinrichtung 9 ein Zertifikat *Cert_{ID_app}* für den öffentlichen Schlüssel *pk_{ID_app}* und speichert das Zertifikat *Cert_{ID_app}* in der PKI *PKI_{3.2}.*

Außerdem erzeugt die Datenverarbeitungseinrichtung 9 eine logische Datenstruktur *LDS₃*, umfassend Hashwerte jedes der Identitätsattribute *attr_{ID},* das Zertifikat *Cert_{ID_app},* das Zertifikat *Cert_{ID_TLS_Client},* sowie digitale Signaturen der Hashwerte der Identitätsattribute *attr_{ID},* des Zertifikats *Cert_{ID_app}* und des Zertifikats *Cert_{ID_TLS_client}* mittels eines privaten Schlüssels *sk_{Per-so_Ident}.* Ein dem privaten Schlüssel *sk_{Perso_Ident}* entsprechender öffentlicher Schlüssel *pk_{Per-so_Ident}* ist Teil eines Zertifikats *Cert_{Perso_Ident}* des Personalisierungsdienstes und ist in der PKI *PKI_{3.3}* veröffentlicht. Des Weiteren wird eine digitale Signatur der logischen Datenstruktur *LDS₃* mittels des privaten Schlüssels *sk_{Perso_Ident}* erzeugt.

Die logische Datenstruktur *LDS₃,* die Zertifikate *Cert_{ID_app}, Cert_{ID_TLS_client}* und *Cert_{Perso_Ident},* der private Schlüssel *sk_{ID_TLS_client}* sowie die Identitätsattribute *attr_{ID}* werden anschließend von der Datenverarbeitungseinrichtung 9 jeweils mittels des öffentlichen Schlüssels *pk_{ID_app}* zu einer verschlüsselten Datenstruktur *enc*(*LDS₃, pk_{ID_app}*)*,* verschlüsselten Zertifikaten *enc*(*Cert_{ID_app}, pk_{ID_app}*), *enc*(*Cert_{ID_TLS_client} pk_{ID_app}*) und *enc*(*Cert_{perso_Ident}, pk_{ID_app}*)*,* einem verschlüsselten privaten Schlüssel *enc*(*sk_{ID_TLS_client}, pk_{ID_app}*) sowie verschlüsselten Identitätsattributen *enc*(*attr_{ID}, pk_{ID_app}*) verschlüsselt.

In Schritt 222B werden die verschlüsselte Datenstruktur *enc*(*LDS₃, pk_{ID_app}*)*,* die verschlüsselten Zertifikate *enc*(*Cert_{ID_app}, pk_{ID_app}*)*, enc*(*Cert_{ID_TLS_client} pk_{ID_app}*) und *enc*(*Cert_{Perso_Ident}, pk_{ID_app}*)*,* der verschlüsselte private Schlüssel *enc*(*sk_{ID_TLS_client}, pk_{ID_app}*) sowie die verschlüsselten Identitätsattribute *enc*(*attr_{ID}, pk_{ID_app}*) von der Datenverarbeitungseinrichtung 9 zurück zur Software-Applikation 14 gesendet.

In Schritt 223B werden die verschlüsselte Datenstruktur *enc*(*LDS₃, pk_{ID_app}*), die verschlüsselten Zertifikate *enc*(*Cert_{ID_app}, pk_{ID_app}*), *enc*(*Cert_{ID_TLS_client} pk_{ID_app}*) und *enc*(*Cert_{Perso_Ident}, pk_{ID_app}*) von der Software-Applikation 14 mit dem privaten Schlüssel *sk_{ID_app}* entschlüsselt und im Datenspeicher 6 auf dem Endgerät 2 gespeichert. Des Weiteren entschlüsselt die Software-Applikation 14 die verschlüsselten Identitätsattribute *enc*(*attr_{ID}, pk_{ID_app}*) sowie den verschlüsselten privaten Schlüssel *enc*(s*k_{ID_TLS_client}, pk_{ID_app}*) mit dem privaten Schlüssel *sk_{ID_app}* und speichert die Identitätsattribute *attr_{ID}* und den privaten Schlüssel s*k_{ID_TLS_client}* verschlüsselt mit einem gerätegebundenen symmetrischen Schlüssel *keyₐₜₜᵣ* auf dem Datenspeicher 6 des Endgeräts 2.

Die übrigen Schritte 224 bis 226 zur Bereitstellung der elektronischen Identität auf dem Endgerät 2 erfolgen wie bei einer einzigen PKI.

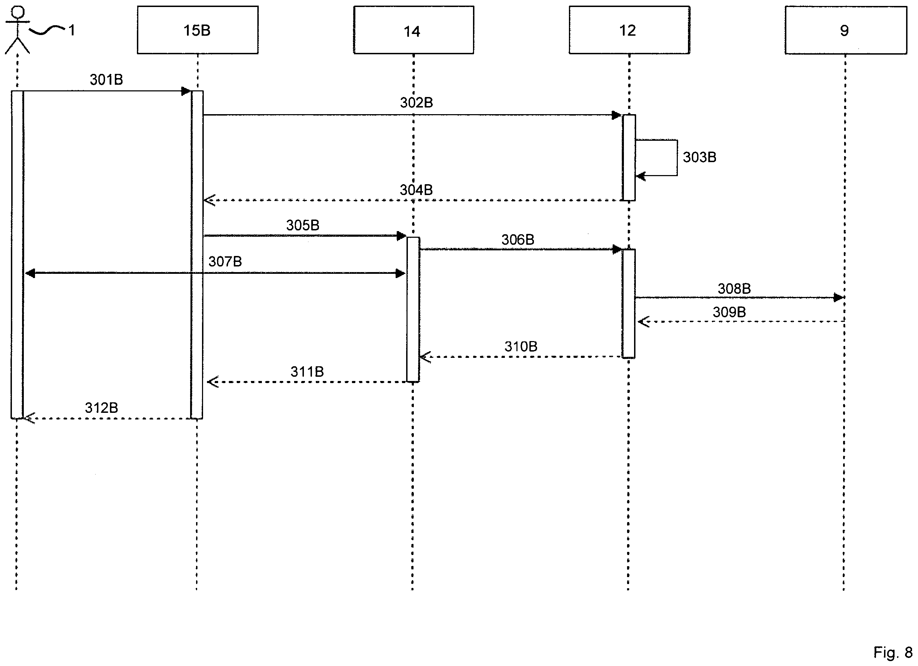

Fig. 8 zeigt eine schematische Darstellung zur Identifikation und/oder Authentisierung mittels der elektronischen Identität gegenüber einem Online-Dienst unter Benutzung der drei PKI *PKI_{3.1}, PKI_{3.2}, PKI_{3.3}.* Im Folgenden werden die hinsichtlich der drei PKI *PKI_{3.1}, PKI_{3.2}, PKI_{3.3}* modifizierten Schritte 301B bis 312B zur Identifikation und Authentisierung mittels der elektronischen Identität erläutert.

In Schritt 301B klickt der Nutzer 1 in einem eigenen Webbrowser 15B (In-App-Browser) der Software-Applikation 14 auf eine Schaltfläche auf der Webseite des Online-Dienstes. Der Webbrowser 15B sendet hierauf eine Login-Anfrage zur Datenverarbeitungseinrichtung 12 des Online-Dienstes über einen mit TLS und dem Zertifikat *Cert_{ID_TLS_client}* gegenseitig authentisierten und gesicherten Kommunikationskanal (Schritt 302B). Die gegenseitige Authentisierung des gesicherten Kommunikationskanals ist ein besonderes Merkmal des Einsatzes dreier PKI. Die Login-Anfrage beinhaltet eine Sitzungskennung *ID_{sessicn},* Die Identität des Online-Dienstes wird durch ein EV-Zertifikat *Cert_{Ev_service}* verifiziert.

Die Schritte 303B bis 305B verlaufen analog zu den Schritten 303 bis 305, jedoch unter Einsatz des Webbrowsers 15B der Software-Applikation 14 anstelle des Webbrowsers 15.

In Schritt 306B analysiert die Software-Applikation 14 das Authentisierungsanfrage-Token *token_{auth_reqest}* und extrahiert aus dem Authentisierungsanfrage-Token *token_{auth_request}* Informationen des Online-Dienstes. Mittels der extrahierten Informationen des Online-Dienstes baut die Software-Applikation 14 eine sichere, gegenseitig authentisierte Verbindung zur Datenverarbeitungseinrichtung 12 des Online-Dienstes auf. An dieser Stelle kann insbesondere der Standard-Protokollablauf für TLS mit einer Client-Authentisierung vor einer Server-Authentisierung genutzt werden, da das Zertifikat *Cert_{ID_app}* keine personenbezogenen Daten enthält und sich die Hashwerte der Identitätsattribute *attr_{ID}* lediglich in der logischen Datenstruktur *LDS₃* befinden. Somit können die Identitätsattribute *attr_{ID}* nicht zu einem nichtauthentisierten Server gelangen.

In Schritt 307B kann der Nutzer 1 mit den aus dem EV-Zertifikat *Cert_{EV_service}* extrahierten Informationen über den Dienst die Authentisierungsanfrage akzeptieren. Das Akzeptieren der Authentisierungsanfrage durch den Nutzer 1 kann beispielsweise in der Eingabeeinrichtung 3 mittels biometrischer Authentifizierung (etwa mittels Eingabe eines Fingerabdrucks des Nutzers 1) oder mittels einer vordefinierten Benutzer-PIN erfolgen. Wenn der Nutzer 1 die Authentisierungsanfrage akzeptiert, werden die logische Datenstruktur *LDS₃* und die angefragten Identitätsattribute *attr_{ID}* zur Datenverarbeitungseinrichtung 12 gesendet.

In Schritt 308B sendet die Datenverarbeitungseinrichtung 12 des Online-Dienstes eine Zertifikat-Gültigkeitsanfrage für das Zertifikat *Cert_{ID_app}* zur PKI *PKI_{3.1}* des Personalisierungsdienstes, eine Zertifikat-Gültigkeitsanfrage für das Zertifikat *Cert_{Psrso_Ident}* zur PKI *PKI_{3.2}* sowie eine Zertifikat-Gültigkeitsanfrage für das Zertifikat *CertID_TLS_client* zur PKI *PKI_{3.3}.*

In Schritt 309B überprüft die Datenverarbeitungseinrichtung 9 mittels der PKI *PKI_{3.1}, PKI_{3.2}* beziehungsweise *PKI_{3.3}* jeweils die Gültigkeit der Zertifikate *Cert_{ID_app}, Cert_{Perso_Ident}* beziehungsweise *CertID_TLS_client* und gibt Resultate der Prüfung der jeweiligen Gültigkeit der Zertifikate *Cert_{ID_app}, Cert_{Perso_Ident}* und *CertID_TLS_client* zurück zur Datenverarbeitungseinrichtung 12.

In Schritt 310B überprüft die Datenverarbeitungseinrichtung 12 des Online-Dienstes, ob die gesendeten Identitätsattribute *attr_{ID}* gültig sind. Diese Überprüfung erfolgt, indem aus den Identitätsattributen *attr_{ID}* mittels einer Hashfunktion Hashwerte berechnet werden und die berechneten Hashwerte mit den in der logischen Datenstruktur *LDS₃* gespeicherten Hashwerten der Identitätsattribute *attr_{ID}* verglichen werden. Des Weiteren verifiziert die Datenverarbeitungseinrichtung 12 die Signatur der logischen Datenstruktur *LDS₃* und überprüft, ob die Zertifikate *Cert_{ID_app}* und *Cert*_{*ID*_*TLS*_*client*} in der logischen Datenstruktur *LDS₃* enthalten sind.

Wenn die berechneten Hashwerte mit den in der logischen Datenstruktur *LDS₃* gespeicherten Hashwerten übereinstimmen, die Signatur der logischen Datenstruktur *LDS₃* verifiziert ist, die Zertifikate *Cert_{ID_app}* und *Cert_{ID_TLS_client}* in der logischen Datenstruktur *LDS₃* enthalten sind und die Zertifikate *Cert_{ID_app}* und *Cert_{ID_TLS_client}* validiert wurden, wird von der Datenverarbeitungseinrichtung 12 eine URI zur Software-Applikation 14 gesendet. Anderenfalls wird der Vorgang abgebrochen.

Wenn die URI von der Datenverarbeitungseinrichtung 12 zur Software-Applikation 14 gesendet wurde, übergibt die Software-Applikation 14 die URI zusammen mit der Sitzungskennung *IDₛₑₛₛᵢₒₙ* dem Webbrowser 15B (Schritt 311B). Hierauf lädt der Webbrowser 15B die empfangene URI (Schritt 312B). Damit ist die Identifikation und Authentisierung mittels der elektronischen Identität unter Einsatz dreier PKI *PKI_{3.1}, PKI_{3.2}, PKI_{3.3}* abgeschlossen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum sicheren Bereitstellen eines personalisierten elektronischen Identität auf einem Endgerät (2), die von einem Nutzer (1) zum Identifizieren bei Inanspruchnahme einer Online-Dienstleistung nutzbar ist, wobei bei dem Verfahren in einem System mit Datenverarbeitungseinrichtungen (9; 10; 11; 12) und einem Endgerät (2), welches einem Nutzer (1) zugeordnet ist, eine Identifikations-Applikation (14) auf dem Endgerät (2) und weiterhin eine Personalisierungs-Applikation und eine Identitätsprovider-Applikation ausgeführt werden und wobei das Verfahren hierbei Folgendes aufweist:
- Übertragen einer Anfrage zum Übermitteln eines dem Nutzer (1) zugeordneten Identitätsattributs von der Personalisierungs-Applikation an die Identitätsprovider-Applikation;
- Übertragen des Identitätsattributs von der Identitätsprovider-Applikation an die Personalisierungs-Applikation, nachdem von dem Nutzer (1) eine Zustimmung zum Übertragen des Identitätsattributs durch die Identitätsprovider-Applikation empfangen wurde;
- Erzeugen eines asymmetrischen Schlüsselpaares mit einem öffentlichen und einem privaten Schlüssel durch die Identifikations-Applikation (14) auf dem Endgerät (2) als Reaktion auf das Empfangen einer Anfrage zum Erzeugen des asymmetrischen Schlüsselpaares in dem Endgerät (2) von der Personalisierungs-Applikation;
- Übertragen des öffentlichen Schlüssels von der Identifikations-Applikation (14) auf dem Endgerät (2) an die Personalisierungs-Applikation;
- Erzeugen eines elektronischen Zertifikats für den öffentlichen Schlüssel durch die Personalisierungs-Applikation und Speichern des elektronischen Zertifikats zu einer ersten Public-Key-Infrastruktur der Personalisierungs-Applikation in einem Datenspeicher, weiterhin umfassend:
- Erzeugen eines Hash-Werts für das Identitätsattribut und
- Aufnehmen des Hash-Werts in das elektronische Zertifikat;
- Verschlüsseln des Identitätsattributs mit dem öffentlichen Schlüssel durch die Personalisierungs-Applikation;
- Übertragen des verschlüsselten Identitätsattributs und des elektronischen Zertifikats von der Personalisierungs-Applikation an die Identifikations-Applikation (14) auf dem Endgerät (2) und
- Entschlüsseln des verschlüsselten Identitätsattributs mit dem privaten Schlüssel und Speichern des entschlüsselten Identitätsattributs und des elektronischen Zertifikats als personalisierte elektronische Identität des Nutzers (1) in einer lokalen Speichereinrichtung des Endgeräts (2).

2. Verfahren nach Anspruch 1, **dadurch gekennzeichnet, dass** das asymmetrische Schlüsselpaar in dem Endgerät (2) als gerätebezogenes asymmetrisches Schlüsselpaar erzeugt werden.

3. Verfahren nach Anspruch 1 oder 2, **dadurch gekennzeichnet, dass** die Identifikations-Applikation (14) zumindest teilweise in einem weiteren Endgerät ausgeführt wird.

4. Verfahren nach mindestens einem der vorangehenden Ansprüche, **gekennzeichnet durch**:
- Verschlüsseln des elektronischen Zertifikats mit dem öffentlichen Schlüssel durch die Personalisierungs-Applikation;
- Übertragen des verschlüsselten elektronischen Zertifikats von der Personalisierungs-Applikation an die Identifikations-Applikation (14) auf dem Endgerät (2) und
~ Entschlüsseln des verschlüsselten elektronischen Zertifikats mit dem privaten Schlüssel.

5. Verfahren nach mindestens einem der vorangehenden Ansprüche, **dadurch gekennzeichnet, dass** Berichtsinformationen erzeugt und übertragen werden, wobei Folgendes vorgesehen ist:
- Erzeugen von ersten Berichtsdaten mittels der Identifikations-Applikation (14) auf dem Endgerät (2), die auf das Speichern des elektronischen Zertifikats, das Bereitstellen der personalisierten elektronischen Identität im Endgerät (2) anzeigen; und
- Übertragen der ersten Berichtsdaten an die Personalisierungs-Applikation.

6. Verfahren nach mindestens einem der vorangehenden Ansprüche, **dadurch gekennzeichnet, dass** das elektronische Zertifikat als ein elektronisches Zertifikat nach dem X.509-Standard erzeugt wird.

7. Verfahren nach mindestens einem der vorangehenden Ansprüche, **dadurch gekennzeichnet, dass** das elektronische Zertifikat und das Identitätsattribut als personalisierte elektronische Identität für eine Identifizierung des Nutzers (1) gegenüber einem Online-Dienstleister verwendet wird, wobei hierbei Folgendes vorgesehen ist:
- Bereitstellen einer Dienstleister-Applikation auf einer der Datenverarbeitungseinrichtungen (9; 10; 11; 12) des Systems;
- Ausbilden einer Datenkommunikationsverbindung zwischen der Identifikations-Applikation (14) auf dem Endgerät (2) und der Dienstleister-Applikation als Reaktion auf das Empfangen einer Anfrage zum Nutzen einer über die Dienstleister-Applikation bereitgestellten Online-Dienstleistung durch die Dienstleister-Applikation;
- Übertragen des elektronischen Zertifikats mit dem hiervon umfassten Hash-Wert für das Identitätsattribut sowie des Identitätsattributs von der Identifikations-Applikation (14) an die Dienstleister-Applikation;
- Prüfen des elektronischen Zertifikats auf Gültigkeit durch die Personalisierungs-Applikation nach Erhalt des elektronischen Zertifikats von der Dienstleister-Applikation;
- Berechnen eines Vergleichs-Hash-Werts für das von der Identifikations-Applikation (14) erhaltene Identitätsattribut durch die Dienstleister-Applikation und Vergleichen des Vergleichs-Hash-Werts mit dem Hash-Wert für das Identitätsattribut aus dem elektronischen Zertifikat und
- Freigeben des Online-Dienstes für den Nutzer, wenn das elektronische Zertifikat als gültig geprüft wird und der Vergleichs-Hash-Wert dem Hash-Wert entspricht.

8. Verfahren nach Anspruch 7, **dadurch gekennzeichnet, dass** die Datenkommunikationsverbindung als eine gegenseitig authentisierte Datenkommunikationsverbindung ausgebildet wird.

9. Verfahren nach mindestens einem der vorangehenden Ansprüche, **dadurch gekennzeichnet, dass** zum Bereitstellen und zum Konfigurieren der Identifikations-Applikation (14) auf dem Endgerät (2) Folgendes vorgesehen ist:
- Installieren der Identifikations-Applikation (14) auf dem Endgerät (2);
- Starten der Identifikations-Applikation (14) als Reaktion auf eine Nutzerstarteingabe;
- Ausbilden einer sicheren Datenkommunikationsverbindung zwischen der Identifikations-Applikation (14) auf dem Endgerät (2) und der Personalisierungs-Applikation auf einer ersten Datenverarbeitungseinrichtung (9);
- Erzeugen eines weiteren asymmetrischen Schlüsselpaares durch die Identifikations-Applikation (14) in dem Endgerät (2);
- Übertragen des weiteren öffentlichen Schlüssels und einer Gerätekennung von der Identifikations-Applikation (14) auf dem Endgerät (2) an die Personalisierungs-Applikation und
- Erzeugen eines vorläufigen elektronischen Zertifikats für den weiteren öffentlichen Schlüssel, welches die Gerätekennung enthält, durch die Personalisierungs-Applikation in der ersten Datenverarbeitungseinrichtung (9).

## Claims

1. A method for securely providing a personalized electronic identity on a terminal (2), which identity is usable by a user (1) for identification purposes when using an online service, wherein in a system with data-processing devices (9; 10; 11; 12) and a terminal (2) assigned to a user (1), the method involves an identification application (14) on the terminal (2) and, furthermore, a personalization application and an identity provider application being executed, and wherein the method comprises the following in this case:
- transmission of a request for relaying an identity attribute assigned to the user (1) from the personalization application to the identity provider application;
- transmission of the identity attribute from the identity provider application to the personalization application, once consent for transmission of the identity attribute by the identity provider application has been received from the user (1);
- generation of an asymmetric key pair with a public and a private key by the identification application (14) on the terminal (2), in response to the receiving of a request for generation of the asymmetric key pair in the terminal (2) from the personalization application;
- transmission of the public key from the identification application (14) on the terminal (2) to the personalization application;
- generation of an electronic certificate for the public key by the personalization application and storage of the electronic certificate to a first public key infrastructure of the personalization application in a data memory, furthermore comprising:
- generation of a hash value for the identity attribute; and
- recording of the hash value in the electronic certificate;
- encryption of the identity attribute with the public key by the personalization application;
- transmission the encrypted identity attribute and the electronic certificate from the personalization application to the identification application (14) on the terminal (2); and
- decryption of the encrypted identity attribute with the private key and storage of the decrypted identity attribute and the electronic certificate as the personalized electronic identity of the user (1) in a local memory device of the terminal (2).

2. The method according to claim 1, **characterized in that** the asymmetric key pair is generated in the terminal (2) as a device-related asymmetric key pair.

3. The method according to claim 1 or 2, **characterized in that** the identification application (14) is executed at least partially in a further terminal.

4. The method according to at least one of the preceding claims, **characterized by**:
- encryption of the electronic certificate with the public key by the personalization application;
- transmission of the encrypted electronic certificate from the personalization application to the identification application (14) on the terminal (2); and
- decryption of the encrypted electronic certificate with the private key.

5. The method according to at least one of the preceding claims, **characterized in that** report information is generated and transmitted, wherein the following is provided:
- generation of first report data by means of the identification application (14) on the terminal (2) which, on the storage of the electronic certificate, indicate provision of the personalized electronic identity in the terminal (2); and
- transmission of the first report data to the personalization application.

6. The method according to at least one of the preceding claims, **characterized in that** the electronic certificate is generated as an electronic certificate according to the X.509 standard.

7. The method according to at least one of the preceding claims, **characterized in that** the electronic certificate and the identity attribute is used as personalized electronic identity in order to identify the user (1) in respect of an online service provider, wherein the following is provided in this case:
- provision of a service provider application on one of the data-processing devices (9; 10; 11; 12) of the system;
- formation of a data communication link between the identification application (14) on the terminal (2) and the service provider application, in response to the receipt of a request for utilization of an online service provided by the service provider application via the service provider application;
- transmission of the electronic certificate with the hash value included therein for the identity attribute and the identity attribute from the identification application (14) to the service provider application;
- checking of the electronic certificate for validity by the personalization application upon receipt of the electronic certificate from the service provider application;
- calculation of a comparative hash value for the identity attribute obtained from the identification application (14) by the service provider application and comparison of the comparative hash value with the hash value for the identity attribute from the electronic certificate, and
- release of the online service for the user when the electronic certificate is checked as being valid and the comparative hash value corresponds to the hash value.

8. The method according to claim 7, **characterized in that** the data communication connection is formed as a mutually authenticated data communication connection.

9. The method according to at least one of the preceding claims, **characterized in that** the following is provided for the provision and configuring of the identification application (14) on the terminal (2):
- installation of the identification application (14) on the terminal (2);
- launch of the identification application (14) in response to a user input;
- formation of a secure data communication connection between the identification application (14) on the terminal (2) and the personalization application on a first data processing device (9);
- generation of a further asymmetric key pair by the identification application (14) in the terminal (2);
- transmission of the further public key and a device identifier from the ID authentication application (14) on the terminal (2) to the personalization application, and
- generation of a temporary electronic certificate for the further public key, which contains the device identifier, by the personalization application in the first data-processing device (9).

## Revendications

1. Procédé de fourniture sécurisée d'une identité électronique personnalisée sur un terminal (2), qui est utilisable par un utilisateur (1) pour s'identifier lors de l'utilisation d'un service en ligne, dans lequel dans le cadre du procédé, dans un système comportant des dispositifs de traitement de données (9 ; 10 ; 11 ; 12) et un terminal (2), qui est attribué à un utilisateur (1), une application d'identification (14) sur le terminal (2) ainsi qu'une application de personnalisation et une application de fournisseur d'identité sont exécutées et dans lequel le procédé comprend les étapes suivantes:
- transmettre une requête de transmission de l'attribut d'identité attribué à l'utilisateur (1) de l'application de personnalisation vers l'application fournisseur d'identité ;
- transmettre l'attribut d'identité de l'application de fournisseur d'identité à l'application de personnalisation après que l'application de fournisseur d'identité a reçu (1) un consentement à la transmission de l'attribut d'identité de la part de l'utilisateur ;
- générer une paire de clés asymétrique avec une clé publique et une clé privée par l'application d'identification (14) sur le terminal (2) en réponse à la réception d'une demande de génération de la paire de clés asymétrique dans le terminal (2) depuis l'application de personnalisation ;
- transmettre la clé publique de l'application d'identification (14) sur le terminal (2) à l'application de personnalisation ;
- générer un certificat électronique pour la clé publique par l'application de personnalisation et mémoriser le certificat électronique pour une première infrastructure de clé publique de l'application de personnalisation dans une mémoire de données, comprenant en outre de :
- générer une valeur de hachage pour l'attribut d'identité et
- inclure la valeur de hachage dans le certificat électronique ;
- chiffrer l'attribut d'identité avec la clé publique par l'application de personnalisation ;
- transmettre l'attribut d'identité chiffré et le certificat électronique de l'application de personnalisation à l'application d'identification (14) sur le terminal (2) et
- déchiffrer l'attribut d'identité chiffré avec la clé privée et mémoriser l'attribut d'identité déchiffré et le certificat électronique en tant qu'identité électronique personnalisée de l'utilisateur (1) dans un dispositif de mémorisation local du terminal (2).

2. Procédé selon la revendication 1, **caractérisé en ce que** la paire de clés asymétrique dans le terminal (2) est générée sous la forme d'une paire de clés asymétrique liée au dispositif.

3. Procédé selon la revendication 1 ou 2, **caractérisé en ce que** l'application d'identification (14) est exécutée au moins partiellement dans un autre terminal.

4. Procédé selon au moins une des revendications précédentes, **caractérisé par** :
- chiffrer le certificat électronique avec la clé publique par l'application de personnalisation ;
- transmettre le certificat électronique chiffré de l'application de personnalisation à l'application d'identification (14) sur le terminal (2) et
- déchiffrer le certificat électronique chiffré avec la clé privée.

5. Procédé selon au moins une des revendications précédentes, **caractérisé en ce que** des informations de rapport sont générées et transmises, dans lequel les étapes suivantes sont prévues :
- générer des premières données de rapport à l'aide de l'application d'identification (14) sur le terminal (2), qui indiquent, en réponse à la mémorisation du certificat électronique, la fourniture de l'identité électronique personnalisée dans le terminal (2) ; et
- transmettre les premières données de rapport vers l'application de personnalisation.

6. Procédé selon au moins une des revendications précédentes, **caractérisé en ce que** le certificat électronique est généré sous la forme d'un certificat électronique selon la norme X.509.

7. Procédé selon au moins une des revendications précédentes, **caractérisé en ce que** le certificat électronique et l'attribut d'identité sont utilisés comme identité électronique personnalisée pour identifier l'utilisateur (1) auprès d'un fournisseur de services en ligne, dans lequel les étapes suivantes sont prévues :
- fournir une application de fournisseur de services sur un des dispositifs de traitement de données (9 ; 10 ; 11 ; 12) du système ;
- établir une connexion de communication de données entre l'application d'identification (14) sur le terminal (2) et l'application de fournisseur de services en réponse à la réception par l'application de fournisseur de services d'une demande d'utilisation d'un service en ligne fourni via l'application de fournisseur de services ;
- transmettre le certificat électronique avec la valeur de hachage contenue dans celui-ci pour l'attribut d'identité et l'attribut d'identité de l'application d'identification (14) à l'application de fournisseur de services ;
- vérifier la validité du certificat électronique par l'application de personnalisation après réception du certificat électronique de l'application de fournisseur de services ;
- calculer une valeur de hachage comparative pour l'attribut d'identité obtenu depuis l'application d'identification (14) par l'application de fournisseur de services et comparer la valeur de hachage comparative avec la valeur de hachage pour l'attribut d'identité du certificat électronique et
- autoriser le service en ligne pour l'utilisateur si le certificat électronique est vérifié comme valide et que la valeur de hachage comparative correspond à la valeur de hachage.

8. Procédé selon la revendication 7, **caractérisé en ce que** la connexion de communication de données est conçue comme une connexion de communication de données mutuellement authentifiée.

9. Procédé selon au moins une des revendications précédentes, **caractérisé en ce que** pour fournir et pour configurer l'application d'identification (14) sur le terminal (2) les étapes suivantes sont prévues :
- installer l'application d'identification (14) sur le terminal (2) ;
- lancer l'application d'identification (14) en réponse à l'entrée de lancement de l'utilisateur ;
- établir une connexion sécurisée de communication de données entre l'application d'identification (14) sur le terminal (2) et l'application de personnalisation sur un premier dispositif de traitement de données (9) ;
- générer une autre paire asymétrique de clés par l'application d'identification (14) dans le terminal (2);
- transmettre l'autre clé publique et un identifiant d'appareil depuis l'application d'identification (14) sur le terminal (2) vers l'application de personnalisation et
- générer un certificat électronique provisoire pour l'autre clé publique, qui contient l'identifiant de dispositif, par l'application de personnalisation dans le premier dispositif de traitement de données (9).
